# EUROPEAN PATENT SPECIFICATION

(11) **EP 2 696 109 B1**
(45) Date of publication and mention of the grant of the patent: **21.01.2015**
(21) Application number: 12194317.9
(22) Date of filing: 27.11.2012
(51) Int. Cl.: F16H 63/14, F16H 61/32

(54) **Automatic transmission device and vehicle including the same**
Automatikgetriebevorrichtung und Fahrzeug damit
Dispositif de transmission automatique et véhicule l'incluant

(30) Priority: 10.08.2012 JP 2012178446
(43) Date of publication of application: 12.02.2014
(73) Proprietor: Yamaha Hatsudoki Kabushiki Kaisha, Iwata-shi, Shizuoka 438-8501 (JP)
(72) Inventor: Minami, Kengo, Iwata-shi, Shizuoka 438-8501 (JP)
(74) Representative: Grünecker, Kinkeldey, Stockmair & Schwanhäusser

(56) References cited:
- EP-A1- 1 132 661
- EP-A1- 2 017 504
- EP-A2- 1 669 625
- EP-A2- 1 965 104
- EP-A2- 2 123 530
- US-A1- 2007 137 340

## Description

The present invention relates to an automatic transmission device and a vehicle including the same.

Conventionally, a vehicle including a stepped transmission mechanism having a dog clutch is known. The stepped transmission mechanism having a dog clutch includes a movable gear which is movable along an axial direction of a main shaft and a fixed gear which is not movable along the axial direction of the main shaft. The movable gear and the fixed gear each have an engaging portion formed of a protrusion, a hole or the like. Such engaging portions form a dog clutch. The movable gear moves via a shift fork by rotating a shift cam. The shift cam has a plurality of protrusions formed at an end portion thereof in an axial direction thereof, and is rotated by a shift arm engaged with such a protrusion. A vehicle for performing gear change of the transmission mechanism by actuating the shift arm by use of an actuator such as an electric motor or the like is also known. Such a vehicle does not require the rider to make a shift operation and thus can alleviate the load of operation of the rider.

Patent Literature 1 discloses a technology for an automatic transmission device for actuating a shift arm by use of an actuator such as an electric motor or the like. By this technology, while the shift arm is operated (during gear change operation), the automatic transmission device does not accept any other gear change instruction. However, by the technology of Patent Literature 1, during the gear change operation, the rider may feel that the gear change operation has finished and input another gear change instruction. If the gear change operation is not performed in this case, the rider may feel that the response is poor. In order to solve this problem, Patent Literature 2 describes a technology for an automatic transmission device **as defined within the preamble of claim 1.** By this technology, even during the gear change operation, another gear change instruction is accepted so that that the next gear change operation is performed.
Patent Literature 1: JP 2006-170229 A
Patent Literature 2: JP 2009-281439 A

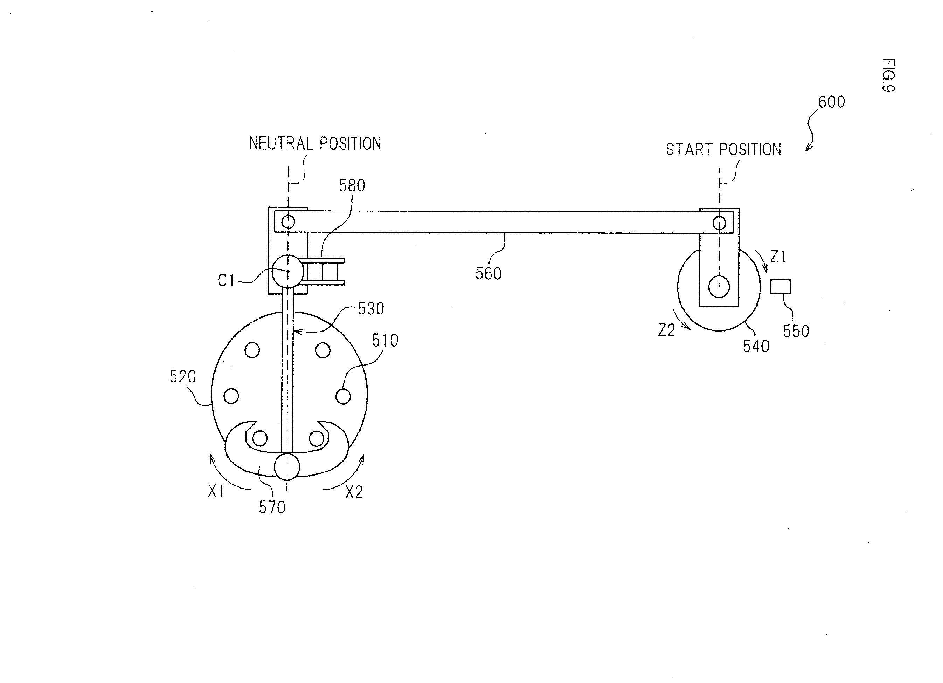

FIG. 9 show an example of automatic transmission device 600 including a shift cam 520 having a plurality of protrusions 510 formed at an end portion in an axial direction thereof, a shift arm 530 engageable with the protrusions 510, a shift actuator 540 for actuating the shift arm 530, and a sensor 550 for detecting a rotation angle of the shift actuator 540 (hereinafter, the rotation angle of the shift actuator will be referred to as the "position of the shift actuator"). The shift arm 530 and the shift actuator 540 are connected to each other via a shift rod 560. The shift arm 530 is urged to return to a neutral position by an urging member 580 such as a spring or the like which is located in the vicinity of the shift arm 530. FIG. 9 shows a case where the shift arm 530 is at the neutral position.

For the shift actuator 540, a start position is preset. The shift actuator 540 is controlled on the basis of the start position. In the example shown in FIG. 9, at the time of shift-up, the shift actuator 540 is rotated by a prescribed angle from the start position in a direction of arrow Z1 and is rotated in the reverse direction by the same angle to return to the start position. At the time of shift-down, the shift actuator 540 is rotated by a prescribed angle from the start position in a direction of arrow Z2 and is rotated in the reverse direction by the same angle to return to the start position. Usually, the position of the shift actuator 540 when the shift arm 530 is at the neutral position at the time of installment or maintenance of the automatic transmission device 600 is set as the start position.

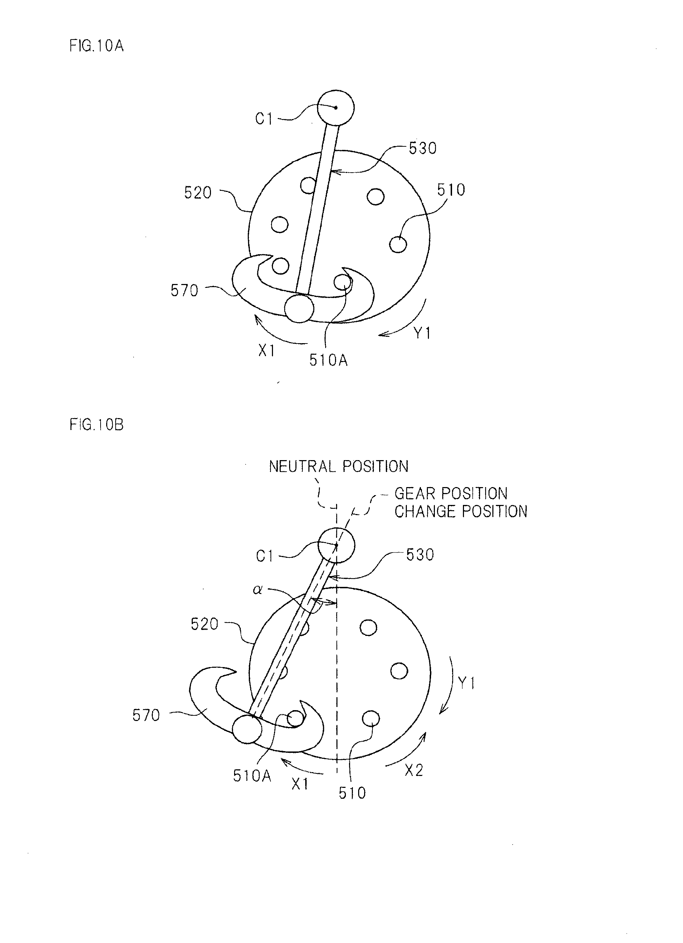

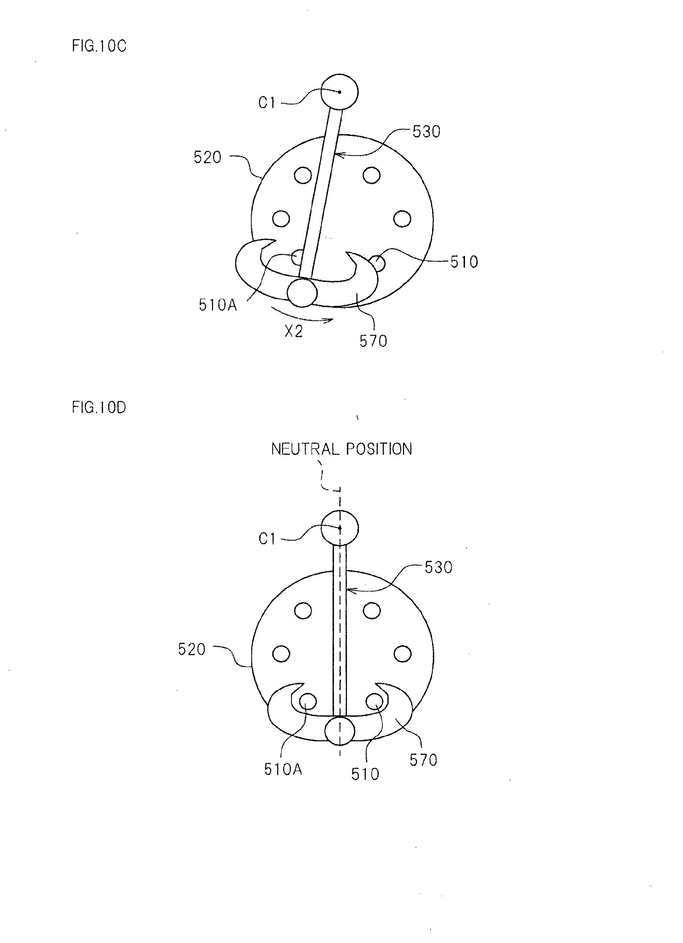

Upon receipt of a gear change instruction from a rider (in this example, a shift-up instruction), the shift actuator 540 is rotated in the direction of arrow Z1 in FIG. 9. As a result, the shift arm 530 is rotated in a direction of arrow X1 in FIG. 9 about a rotation center C1. As shown in FIG. 10A, a claw 570 of the shift arm 530 is put into engagement with a protrusion 510A of the shift cam 520, and thus the shift cam 520 is rotated in a direction of arrow Y1 in FIG. 10A along the rotation of the shift arm 530. When, as shown in FIG. 10B, the shift arm 530 is rotated by a prescribed angle α and thus the shift cam 520 is rotated by a fixed angle, the change of gear position is finished. When the change of gear position is finished, the shift actuator 540 is rotated in the direction of arrow Z2 in FIG. 9 until returning to the start position. Owing to this, the shift arm 530 is rotated in a direction of arrow X2 in FIG. 10B, reaches the position shown in FIG. 10C, and then returns to the neutral position shown in FIG. 10D. When a prescribed time duration passes after the shift actuator 540 returns to the neutral position, supply of a signal to the shift actuator 540 is stopped. Since the shift actuator 540 does not give a driving force anymore, the shift arm 530 receives only an urging force of the urging member 580 and is kept at the neutral position. Thus, the gear change operation is finished.

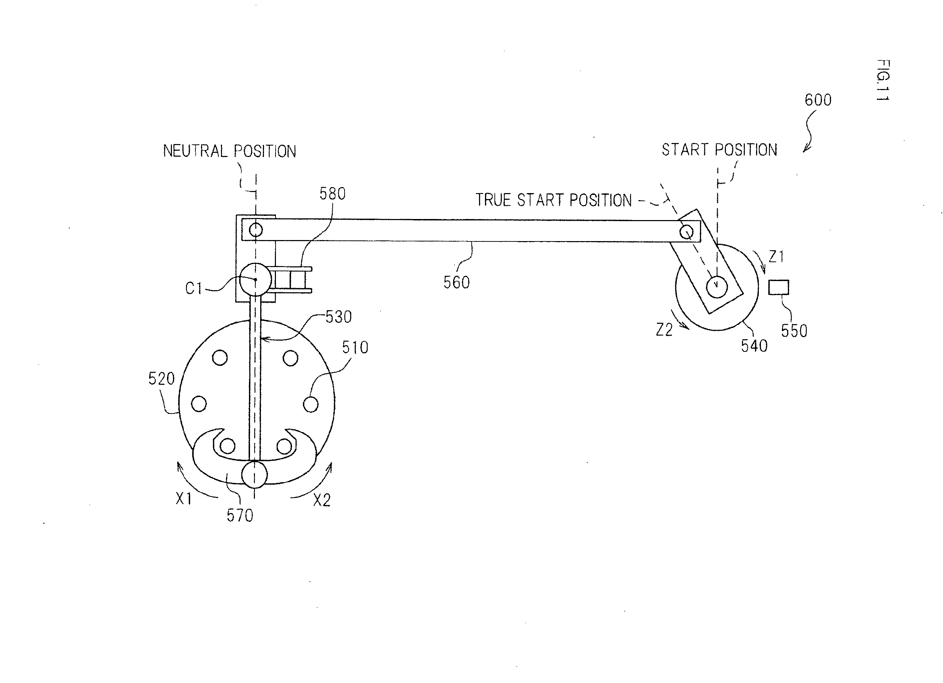

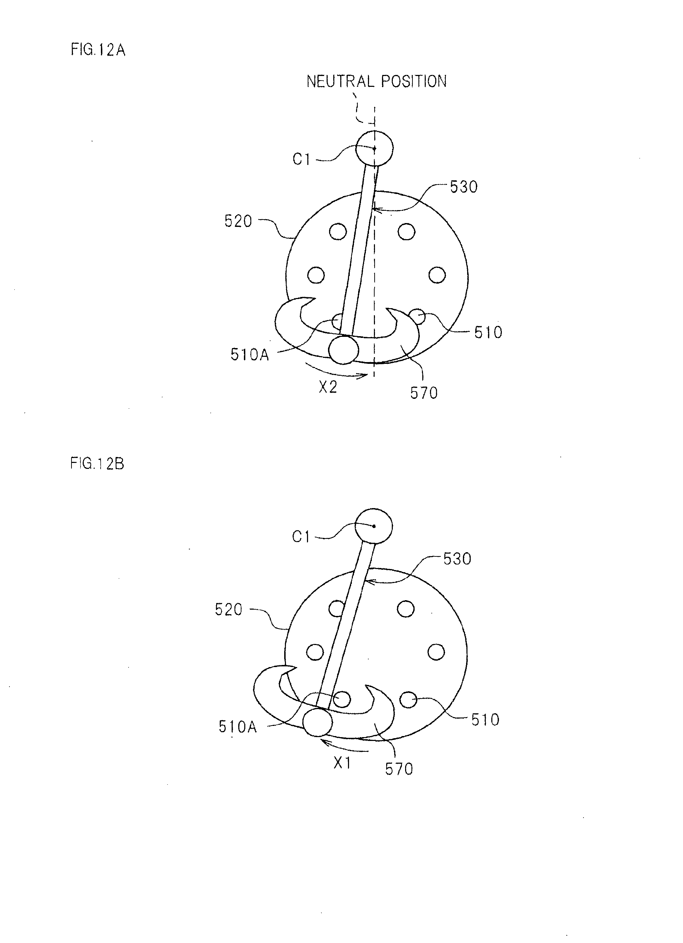

There is a case where the start position is deviated for some external factor. For example, the start position may be deviated when the attaching position of the sensor 550 is deviated, or when the length of the shift rod 560 for coupling the shift actuator 540 and the shift arm 530 is changed. As an example, FIG. 11 shows a state where the shift rod 560 is made shorter. In this example, the position of the shift actuator 540 when the shift arm 530 is at the neutral position (hereinafter, the position of the shift actuator 540 in such a case will be referred to as the "true start position") is deviated in the direction of arrow Z2 from the original start position. In the case where a gear change instruction (in this example, a shift-up instruction) is issued by the rider when there is such a deviation, the shift arm 530 may not return to the neutral position as shown in FIG. 12A even when the change of gear position is finished and the shift actuator 540 is returned to the original start position.

In the case where the gear change is continually performed within a short time as in the case where during the gear change operation, another gear change instruction is accepted, the shift actuator 540 returns to the start position (see FIG. 12A) and immediately starts rotating in the direction of arrow Z1 in FIG. 11 for performing the next gear change. Therefore, as shown in FIG. 12B, the shift arm 530 is rotated in the direction of arrow X1 in the state where the claw 570 and the protrusion 510 are not in engagement with each other. As a result, a case may occur where the shift cam 520 is not rotated although a gear change instruction is received and thus the gear change is not performed.

The present invention made in light of the above-described situation has an object of providing an automatic transmission device for, when gear change is continually performed within a short time, preventing a case where a shift arm and a protrusion of a shift cam are not put into engagement with each other, and thus performing the gear change with certainty. **Such an object is achieved by an automatic transmission device**

### according to claim 1.

An automatic transmission device according to the present invention includes a stepped transmission mechanism including a rotatable shift cam having a plurality of first engaging portions and a shift arm having a second engaging portion engageable with any of the first engaging portions; in which when the shift arm is moved from a neutral position to a gear position change position, the second engaging portion is put into engagement with one of the first engaging portions and the shift cam is rotated along with the movement of the shift arm, and thus change of gear position is performed; and when the shift arm is moved from the gear position change position to the neutral position, the second engaging portion is released from the engagement with the one of the first engaging portions and becomes engageable with another one of the first engaging portions; a shift actuator configured to give a driving force to the shift arm so as to move the shift arm from the neutral position toward the gear position change position, by moving from a start position to an end position, , and configured to give the shift arm a driving force so as to move the shift arm from the gear position change position toward the neutral position, by moving from the end position to the start position; an urging member configured to urge the shift arm toward the neutral position; a gear change instruction output device configured to output a gear change instruction; and a shift actuator control device configured to control the shift actuator. In the case where after a first gear change instruction is output from the gear change instruction output device, a second gear change instruction is output from the gear change instruction output device before the shift arm returns to the neutral position after moving from the neutral position to the gear position change position, the shift actuator control device is configured to control the shift actuator such that a driving force of the shift actuator becomes zero or smaller than an urging force of the urging member, after change of gear position based on the first gear change instruction is finished, and thus the shift arm is returned to the neutral position by the urging force of the urging member; and the shift actuator control device is configured to then control the shift actuator such that the shift arm is moved from the neutral position to the gear position change position, and thus change of gear position is performed based on the second gear change instruction.

With the automatic transmission device according to the present invention, in the case where in a time duration in which the shift arm is moved from the neutral position to the gear position change position and back to the neutral position, a new gear change instruction (second gear change instruction) is output from the gear change instruction output device, the shift actuator control device makes the driving force of the shift actuator zero or smaller than the urging force of the urging member after, or in the middle of, returning the shift actuator to the start position. Therefore, the shift arm is returned to the neutral position by the urging force of the urging member. Thus, even when the start position of the shift actuator is deviated, the shift arm is returned to the neutral position with certainty before the change of gear position based on the second gear change instruction is started. When the shift arm is returned to the neutral position, the second engaging portion of the shift arm is put into engagement with one of the first engaging portions of the shift cam with certainty. Therefore, the change of gear position based on the second gear change instruction can be performed with certainty.

According to an embodiment of the present invention, after the shift actuator is returned from the end position to the start position, the shift actuator control device is configured to control the shift actuator such that the driving force of the shift actuator becomes zero or smaller than the urging force of the urging member, and thus the shift arm is returned to the neutral position by the urging force of the urging member.

Owing to this, the shift arm can be moved quickly by the driving force of the shift actuator until the shift actuator is returned to the start position. The time duration required to move the shift arm to the neutral position by the urging force of the urging member is shortened. Therefore, the gear change can be realized within a shorter time.

According to an embodiment of the present invention, a time duration in which the shift actuator is controlled such that the driving force of the shift actuator becomes zero or smaller than the urging force of the urging member is longer than a time duration in which the shift actuator is kept at the start position.

Owing to this, the shift arm can be returned to the neutral position with more certainty.

According to an embodiment of the present invention, the shift actuator is an electric motor; and the shift actuator control device is configured to stop supply of electricity to the electric motor after the electric motor is returned from the end position to the start position, and thus the shift arm is returned to the neutral position by the urging force of the urging member.

Owing to this, the shift arm can be moved quickly by the driving force of the shift actuator until the shift actuator is returned to the start position. The time duration required to move the shift arm to the neutral position by the urging force of the urging member is shortened. Therefore, the gear change can be realized within a shorter time.

According to an embodiment of the present invention, when a prescribed time duration passes after the second gear change instruction is output from the gear change instruction output device, the shift actuator control device is configured to control the shift actuator such that the driving force of the shift actuator becomes zero or smaller than the urging force of the urging member, and thus the shift arm is returned to the neutral position by the urging force of the urging member.

The shift arm can be close to the neutral position to some extent by the driving force of the shift actuator. Therefore, the time duration required to return the shift arm to the neutral position can be shortened. Thus, the gear change can be realized within a short time.

According to an embodiment of the present invention, the automatic transmission device further includes a clutch provided between the engine and a driving wheel of a vehicle; a clutch actuator configured to engage and disengage the clutch; and a clutch state detection device configured to detect a half clutch state of the clutch. The transmission mechanism is preferably provided between the clutch and the driving wheel; and in the case where the first gear change instruction is output from the gear change instruction output device and then the second gear change instruction is output from the gear change instruction output device while the clutch is in a half clutch state, the shift actuator control device is configured to control the shift actuator such that the driving force of the shift actuator becomes zero or smaller than the urging force of the urging member, after the change of gear position based on the first gear change instruction is finished, and thus the shift arm is returned to the neutral position by the urging force of the urging member; and the shift actuator control device is configured to then control the shift actuator such that the shift arm is moved from the neutral position to the gear position change position, and thus the change of gear position is performed based on the second gear change instruction.

Owing to this, the shift arm is returned to the neutral position with certainty before the change of gear position based on the second gear change instruction is started. The second engaging portion of the shift arm is put into engagement with one of the first engaging portions of the shift cam with certainty. Therefore, the change of gear position based on the second gear change instruction can be performed with certainty.

According to an embodiment of the present invention, the urging member is formed of a spring for urging the shift arm toward the neutral position.

The urging force for urging the shift arm can be easily adjusted by changing the type or material of the spring to be used.

According to an embodiment of the present invention, the automatic transmission device further includes a shift rod coupled to the shift actuator and the shift arm and having an adjustable length.

When the length of the shift rod is adjusted, the initial position of the shift arm may be deviated. However, even in such a case, the automatic transmission device having the above-described structure can perform the gear change continually within a short time.

According to an embodiment of the present invention, a vehicle including the automatic transmission device having the above-described structure is provided.

According to the present invention, a vehicle providing the above-described functions and effects can be provided.

As described above, according to the present invention, an automatic transmission device can be provided for, when gear change is continually performed within a short time, preventing a case where the shift arm and the protrusion of the shift cam are not put into engagement with each other, and thus performing gear change with certainty.

FIG. 1 is a side view of a motorcycle according to an embodiment of the present invention.
FIG. 2 is a structural view of a handle according to an embodiment of the present invention.
FIG. 3 is structural view of an engine according to an embodiment of the present invention.
FIG. 4 is cross-sectional view showing an internal structure of a power unit according to an embodiment of the present invention.
FIG. 5A is a block diagram showing a part of elements of the motorcycle according to an embodiment of the present invention.
FIG. 5B is a side view showing a state where a shift arm of a transmission mechanism according to an embodiment of the present invention is moved to a gear position change position.
FIG. 6 is a flowchart showing transmission control of the automatic transmission device according to an embodiment of the present invention.
FIG. 7A is a side view showing a state where a part of the transmission mechanism according to an embodiment of the present invention does not operate properly.
FIG. 7B is a side view showing a state where the shift arm of the transmission mechanism according to an embodiment of the present invention is moved to a neutral position during control.
FIG. 8 is a timing diagram regarding the transmission control of the automatic transmission device according to an embodiment of the present invention.
FIG. 9 is a side view showing an example of structure of the automatic transmission device.
FIG. 10A is a side view showing a part of the structure of the automatic transmission device.
FIG. 10B is a side view showing a part of the structure of the automatic transmission device.
FIG. 10C is a side view showing a part of the structure of the automatic transmission device.
FIG. 10D is a side view showing a part of the structure of the automatic transmission device.
FIG. 11 is a side view showing a state where a part of the transmission mechanism malfunctions.
FIG. 12A is a side view showing a part of the structure of the automatic transmission device.
FIG. 12B is a side view showing a part of the structure of the automatic transmission device.

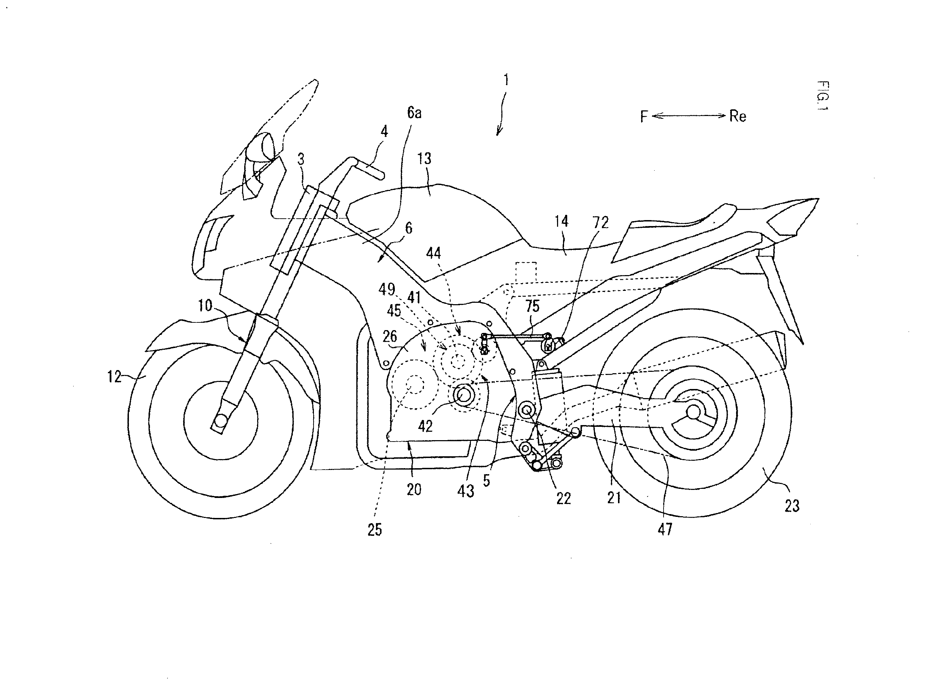

Hereinafter, an embodiment of the present invention will be described. As shown in FIG. 1, a vehicle according to this embodiment is a motorcycle 1. The motorcycle 1 is not limited to any specific type and may be of a so-called scooter type, a moped type, an off-road type, an on-road type or the like. A vehicle according to the present invention is not limited to a motorcycle, and may be a saddle type vehicle which a rider (user) rides astride or an equivalent thereof. Saddle type vehicles include, for example, an ATV (All Terrain Vehicle), a four-wheel buggy or the like in addition to a motorcycle. In FIG. 1, reference signs F and Re respectively represent "front" and "rear".

As shown in FIG. 1, the motorcycle 1 includes a head pipe 3 and a body frame 6. The body frame 6 includes two, i.e., left and right, frames 6a extending rearward from the head pipe 3. FIG. 1 shows only one frame 6a. A rear portion of the frame 6a extends downward. The rear portion of the frame 6a is connected to a rear arm bracket 5. The rear arm bracket 5 is connected to a front end portion of a rear arm 21 via a pivot shaft 22. The rear arm 21 is swingable upward and downward about the pivot shaft 22. At a rear end portion of the rear arm 21, a rear wheel 23 is supported. The rear wheel 23 is a driving wheel drivable by an engine 45 described later.

Above the frame 6a, a fuel tank 13 is located. Rearward to the fuel tank 13, a seat 14 on which the rider may sit is located.

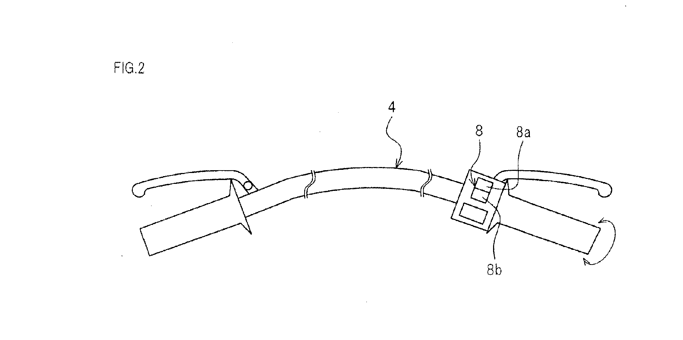

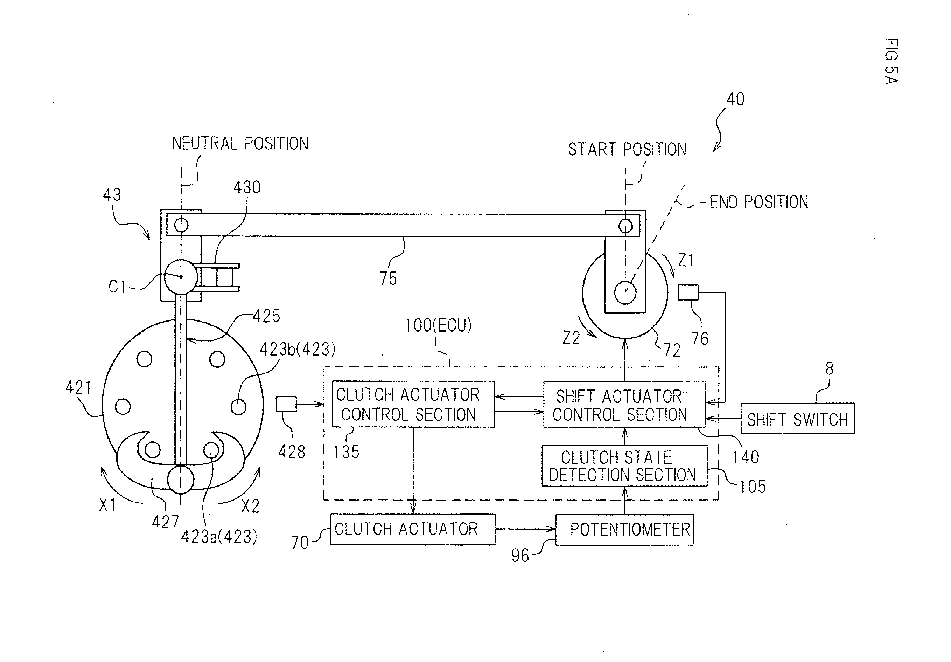

The head pipe 3 supports a steering shaft (not shown), and a handle 4 is provided on the steering shaft. As shown in FIG. 2, the handle 4 is provided with a shift switch 8. The shift switch 8 includes a shift-up switch 8a and a shift-down switch 8b, and can be used to increase or decrease a transmission gear 49 described later in the range from a neutral position to a maximum position (e.g., sixth gear) by a manual operation. The shift switch 8 outputs a gear change instruction to a shift actuator control section 140 (see FIG. 5A) described later. As described later, the shift actuator 140 performs change of gear position of a transmission mechanism 43 based on the gear change instruction.

At a lower portion of the steering shaft, a front fork 10 is provided. At a lower end of the front fork 10, the front wheel 12 is rotatably supported. The front wheel 12 is a subordinate wheel rotating in accordance with the running of the motorcycle 1.

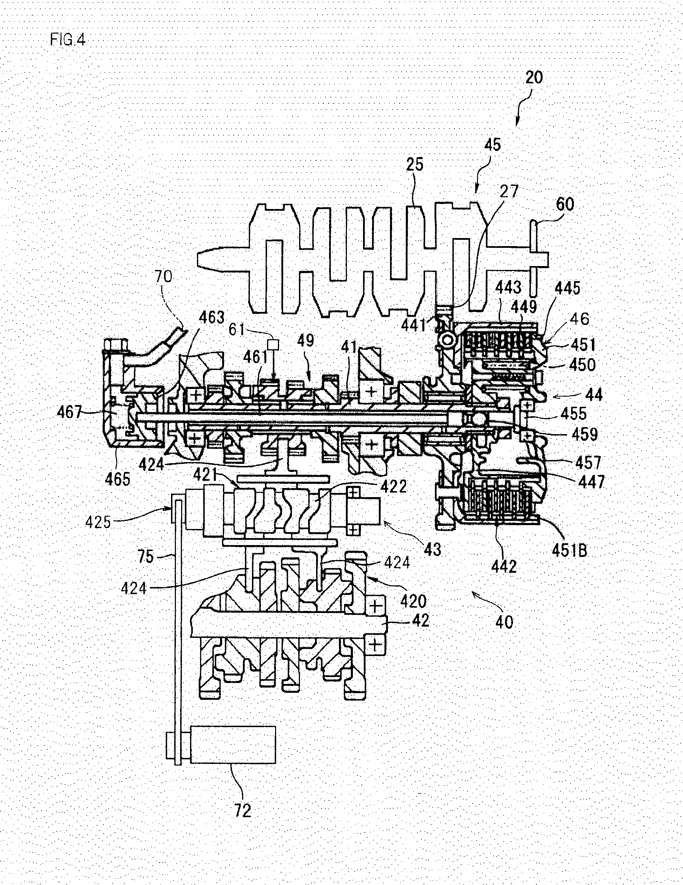

From the frame 6a and the rear arm bracket 5, a power unit 20 is suspended. FIG. 4 is a cross-sectional view showing an internal structure of the power unit 20. As shown in FIG. 4, the power unit 20 includes at least the engine 45 and an automatic transmission device 40. The engine 45 and the automatic transmission device 40 are integrally assembled to a crankcase 26 (see FIG. 1).

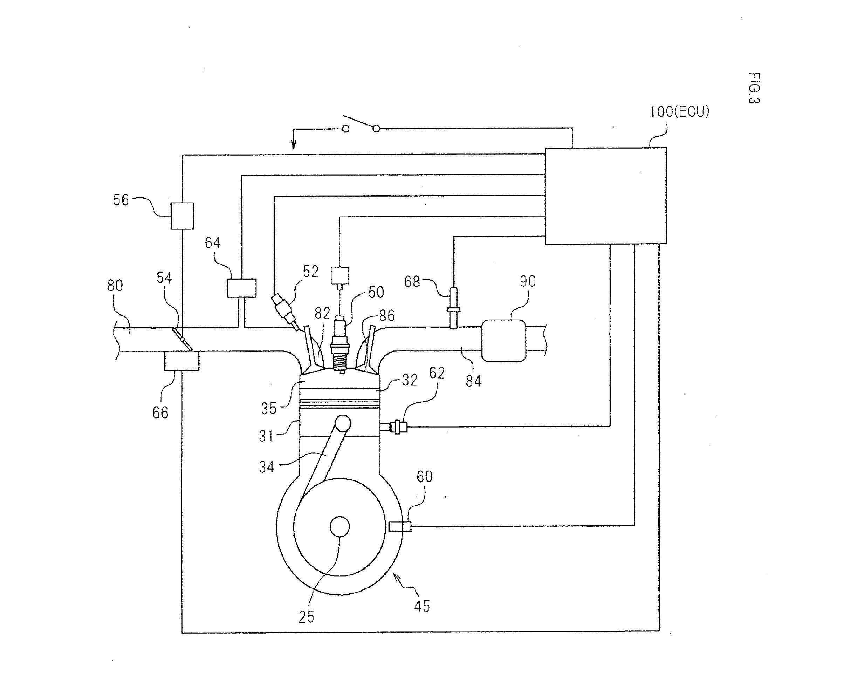

As shown in FIG. 3, the engine 45 includes a cylinder 31, a piston 32 reciprocating in the cylinder 31, a crankshaft 25, and a connection rod 34 for coupling the piston 32 and the crankshaft 25 to each other. The engine 45 includes a fuel injection valve 52, which is a fuel injection device for injecting fuel, and an ignition device 50 for igniting the fuel in a combustion chamber 35. The engine 45 includes a crankshaft rotation speed sensor 60 for detecting a rotation speed (number of rotations per unit time) of the crankshaft 25 and a temperature sensor 62 for detecting a temperature of the engine 45. Hereinafter, the rotation speed of the crankshaft 25 will be referred to as the "rotation speed of the engine 45". The fuel injection valve 52 is connected to a fuel tank (not shown). The temperature sensor 62 may detect the temperature of a part of the engine 45 (e.g., cylinder). In the case where the engine 45 is a water-cooled engine, the temperature sensor 62 may detect a temperature of the cooling water. Namely, the temperature sensor 62 may detect the temperature of the engine 45 directly or indirectly via the cooling water or the like.

The engine 45 includes an intake path 80 for introducing air to the combustion chamber 35, an intake valve 82 for opening or closing the intake path 80 and the combustion chamber 35 with respect to each other, a discharge path 84 for discharging exhaust gas from the combustion chamber 35, and a discharge valve 86 for opening or closing the combustion chamber 35 and the discharge path 84 with respect to each other. In this embodiment, the fuel injection valve 52 is located so as to inject the fuel to the inside of the intake path 80. The fuel injection valve 52 may inject the fuel directly to the inside of the combustion chamber 35. The engine 45 may include two types of fuel injection valves for injecting the fuel to the inside of the intake path 80 and to the inside of the combustion chamber 35 respectively.

In the intake path 80, a pressure sensor 64 is provided for detecting an intake pressure, which is an internal pressure of the intake path 80. In the intake path 80, a throttle valve 54 is located. The throttle valve 54 is an electronically controllable valve, a throttle opening of which is controlled by a throttle driving actuator 56. The throttle valve 54 adjusts the flow rate or the speed of air flowing in the intake path 80. The throttle valve 54 is provided with a throttle position sensor 66 for detecting the opening of the throttle valve 54. The throttle position sensor 66 outputs a throttle opening signal to an ECU 100.

In the discharge path 84, a catalyst 90 is provided. Also in the discharge path 84, an O₂ sensor 68 for detecting oxygen contained in the exhaust gas is provided as an air-to-fuel ratio sensor. The air-to-fuel ratio sensor may be any sensor which can detect at least whether the air-to-fuel ratio is in a rich region or a lean region. The O₂ sensor 68 according to this embodiment can detect whether the air-to-fuel ratio is in the rich region or the lean region. Needless to say, an element for linearly outputting an air-to-fuel ratio (linear A/F sensor), namely, a sensor for outputting the air-to-fuel ratio itself may be used as the air-to-fuel ratio sensor.

As shown in FIG. 4, the crankshaft 25 is coupled to a main shaft 41 via an automatic clutch 44. The main shaft 41 is located parallel to the crankshaft 25. The main shaft 41 is also located parallel to a drive shaft 42. The main shaft 41 is provided with a main shaft rotation speed sensor 61 for detecting a rotation speed (number of rotations per unit time) of the main shaft 41.

The automatic clutch 44 according to this embodiment includes a multi-plate friction clutch 46 and a clutch actuator 70. The friction clutch 46 is located between the engine 45 and the rear wheel 23. The friction clutch 46 conveys and cuts off a torque from the engine 45 to the rear wheel 23. The friction clutch 46 includes a clutch housing 443 and a clutch boss 447. Inside the clutch housing 443, a plurality of friction plates 445 is provided as a driving-side rotation body. The torque of the engine 45 is conveyed to the friction plates 445. Outside the clutch boss 447, a plurality of clutch plates 449 are provided as a subordinate-side rotation body. Each of the friction plates 445 rotates together with the clutch housing 443. By contrast, each of the friction plates 445 can be moved in an axial direction of the main shaft 41. The plurality of friction plates 445 is located along the axial direction of the main shaft 41. The friction clutch 46 may be a single-plate clutch instead of the multi-plate clutch.

Each of the clutch plates 449 faces each of the friction plates 445 adjacent thereto. Each of the clutch plates 449 rotates together with the clutch boss 447. By contrast, each of the clutch plates 449 can be moved in the axial direction of the main shaft 41. In this embodiment, the plurality of friction plates 445 and the plurality of clutch plates 449 form a plate group 442.

As shown in FIG. 4, a pressure plate 451 is located outward to the main shaft 41 in a vehicle width direction (rightward in FIG. 4). The pressure plate 451 is generally formed to be disc-shaped. In an outer portion of the pressure plate 451 in a radial direction thereof, a press portion 451B protruding toward the plate group 442 is formed. The press portion 451B is located at a position facing the friction plate 445 which is located at the rightmost position in the plate group 442.

The friction clutch 46 is provided with a spring 450. The spring 450 urges the pressure plate 451 inward in the vehicle width direction (leftward in FIG. 4). Namely, the spring 450 urges the pressure plate 451 in a direction in which the press portion 451B presses the plate group 442.

A central portion of the pressure plate 451 is in engagement with an end portion (right end portion in FIG. 4) of a push rod 455 via a bearing 457. Thus, the pressure plate 451 is rotatable with respect to the push rod 455. The main shaft 41 has a tubular shape. The other end portion (left end portion) of the push rod 455 is accommodated in the main shaft 41. In the main shaft 41, a spherical ball 459 is provided adjacent to the other end portion (left end portion) of the push rod 455. Also in the main shaft 41, a push rod 461 is provided adjacent to the ball 459.

A left end portion of the push rod 461 protrudes outward from the main shaft 41. At the left end portion of the push rod 461, a piston 463 is integrally provided. The piston 463 is guided by a cylinder main body 465 to be slidable in the axial direction of the main shaft 41.

The friction clutch 46 is disengaged or engaged by the clutch actuator 70. The clutch actuator 70 is an electric motor in this embodiment, but is not limited thereto. Driving the clutch actuator 70 allows the friction plates 445 and the clutch plates 449 to be close to, and thus to be in contact with, each other. Driving the clutch actuator 70 also allows the friction plates 445 and the clutch plates 449 to be separated from, and thus to be distanced from, each other. In this manner, the friction clutch 46 can be disengaged or engaged.

The clutch actuator 70 is provided with a potentiometer 96 (see FIG. 5A). The potentiometer 96 is a clutch actuator sensor for detecting a driving amount of the clutch actuator 70. The potentiometer 96 detects a rotation angle of the clutch actuator 70 (hereinafter, the rotation angle of the clutch actuator 70 will be referred to as the "position of the clutch actuator 70"). The clutch actuator 70 and the clutch actuator sensor may be integrated together. An example of such an integrated clutch actuator 70 is a servo motor capable of detecting a rotation angle and a rotation position.

When the clutch actuator 70 is driven, a space 467 enclosed by the piston 463 and the cylinder main body 465 is supplied with hydraulic oil. A change of the driving force of the clutch actuator 70 adjusts the oil pressure of the hydraulic oil supplied to the space 467 in the cylinder main body 465. When the space 467 is supplied with the hydraulic oil, the piston 463 is pushed and moved rightward in FIG. 4. Thus, the piston 463 pushes the pressure plate 451 rightward in FIG. 4 via the push rod 461, the ball 459, the push rod 455 and the bearing 457. When the rightward (in FIG. 4) pushing force applied to the pressure plate 451 via the piston 463 is increased, the press portion 451B of the pressure plate 451 is separated from the friction plates 445. As a result, the friction clutch 46 is put into a disengaged state. In the state where the press portion 451B is separated from the plate group 442, each friction plate 445 and each clutch plate 449 are separated from each other, and a small gap is formed between each friction plate 445 and each clutch plate 449. Therefore, no friction force for conveying a torque is generated between each friction plate 445 and each clutch plate 449.

For driving the clutch actuator 70 to engage the friction clutch 46, the pressure plate 451 is moved leftward in FIG. 4 by the spring 450. When the pressure plate 451 is moved leftward in FIG. 4, the press portion 451B presses the plate group 442 leftward. As a result, the friction clutch 46 is put into a half clutch state. Namely, each friction plate 445 and each clutch plate 449 contact each other and rotate with respect to each other. Owing to this, the torque of the engine 45 is conveyed to the main shaft 41 via the friction plates 445 and the clutch plates 449. As seen from this, the "half clutch state" of the friction clutch 46 refers to a state where a part of the torque of the engine 45 is conveyed to the main shaft 41 via the friction clutch 46 while each friction plate 445 and each clutch plate 449 of the friction clutch 46 rotate with respect to each other. Namely, the "half clutch state" of the friction clutch 46 refers to a state where the clutch housing 443 (friction plates 445) and the clutch boss 447 (clutch plates 449) are in contact with each other while the difference between the rotation speed of the clutch housing 443 (friction plates 445) and the rotation speed of the clutch boss 447 (clutch plates 449) (the difference will be referred to as the "clutch rotation speed difference of the friction clutch 46") is not zero.

When the pressure plate 451 is moved further leftward in FIG. 4 by the spring 450, each friction plate 445 and each clutch plate 449 of the plate group 442 are put into pressure contact with each other. As a result, the friction clutch 46 is put into an engaged state. Namely, each friction plate 445 and each clutch plate 449 rotate integrally together.

As described above, the pressure plate 451 moves in one direction or the other direction along the axial direction of the main shaft 41 in accordance with which of the driving force of the clutch actuator 70 and the urging force of the spring 450 is larger. In accordance with such a movement, the friction clutch 46 is put into an engaged state, a half clutch state or a disengaged state.

At the crankshaft 25 of the engine 45, a gear 27 is integrally supported. At the main shaft 41, a gear 441 gearing with the gear 27 is supported. The gear 441 is rotatable with respect to the main shaft 41. The gear 441 is provided integrally to, for example, the clutch housing 443. Thus, the torque of the engine 45 is conveyed from the crankshaft 25 via the gear 441 to the clutch housing 443. The torque of the engine 45 is also conveyed from the clutch housing 443 to the clutch boss 447 by a friction force generated between the plurality of friction plates 445 and the plurality of clutch plates 449. The clutch boss 447 and the main shaft 41 rotate integrally together. Namely, the clutch boss 447 and the main shaft 41 do not rotate with respect to each other. Therefore, when the friction clutch 46 is engaged, the torque of the engine 45 is conveyed to the main shaft 41.

The push rod 455 is not limited to a push rod for pushing the pressure plate 451 rightward in FIG. 4 by a mechanism inserted through the main shaft 41. The push rod 455 may be a push rod for pulling the pressure plate 451 rightward in FIG. 4 by a mechanism provided outward to the pressure plate 451 in the vehicle width direction (rightward in FIG. 4).

Now, the automatic transmission device 40 according to this embodiment will be described. As shown in FIG. 4, the automatic transmission device 40 according to this embodiment includes at least the automatic clutch 44 and the transmission mechanism 43. The transmission mechanism is of a so-called dog clutch type and also is a stepped transmission mechanism. The transmission mechanism 43 is located on a power transmission path for conveying the torque of the engine 45 to the rear wheel 23 (see FIG. 1), between the friction plates 445 of the friction clutch 46 and the rear wheel 23. The transmission mechanism 43 includes transmission gears 49 and 420, a shift cam 421, a shift arm 425, shift forks 424, a shift actuator 72 and the like described later.

The main shaft 41 of the transmission mechanism 43 has a plurality of transmission gears 49 attached thereto.
By contrast, the drive shaft 42 of the transmission mechanism 43 has a plurality of transmission gears 420 attached thereto corresponding to the plurality of transmission gears 49. Only a selected transmission gear 49 among the plurality of transmission gears 49 and only a selected transmission gear 420 among the plurality of transmission gears 420 are engageable with each other. At least either the transmission gears 49 among the plurality of transmission gears 49 which are not selected, or the transmission gears 420 among the plurality of transmission gears 420 which are not selected, are rotatable with respect to the main shaft 41 or the drive shaft 42. Namely, at least either the transmission gears 49 among the plurality of transmission gears 49 which are not selected, or the transmission gears 420 among the plurality of transmission gears 420 which are not selected, idle with respect to the main shaft 41 or the drive shaft 42. The conveyance of rotation between the main shaft 41 and the drive shaft 42 is performed only via the selected transmission gear 49 and the selected transmission gear 420 which are gearing with each other.

Switching of the transmission gears 49 and 420 in the transmission mechanism 43, namely, the change of gear position of the transmission mechanism 43 is performed by driving the shift actuator 72 and thus rotating the shift cam 421. The shift actuator 72 is an electric motor 72 in this embodiment, but is not limited thereto. A change of the rotation angle of the shift actuator 72 (hereinafter, the rotation angle of the shift actuator 72 will be referred to as the "position of the shift actuator 72") gives a driving force to the shift arm 425. This will be described specifically. For the shift actuator 72, a start position is preset. The shift actuator 72 is controlled on the basis of the start position. A change of the position of the shift actuator 72 from the start position to an end position gives a driving force to the shift arm 425 for moving the shift arm 425 from a neutral position toward a gear position change position. A change of the position of the shift actuator 72 from the end position to the start position gives a driving force to the shift arm 425 for moving the shift arm 425 from the gear position change position toward the neutral position. The "gear position change position" refers to the following position. The shift arm 425 rotates the shift cam 421 by a prescribed angle, and as a result, the selected and engaged pair of transmission gears among the plurality of transmissions gears 49 and 420 are released from the engagement, and another pair of transmissions gears are put into engagement with each other. The "gear position change position" refers to a position at which such another pair of transmissions gears is put into engagement with each other.

The shift actuator 72 is provided with a potentiometer 76. The potentiometer 76 is a shift actuator sensor for detecting a driving amount of the shift actuator 72. The potentiometer 76 detects the position of the shift actuator 72. The potentiometer 76 outputs the detected position of the shift actuator 72 to the shift actuator control section 140 (see FIG. 5A). The shift actuator 72 and the shift actuator sensor may be integrated together. An example of such an integrated shift actuator 72 is a servo motor capable of detecting a rotation angle and a rotation position.

An outer circumferential surface of the shift cam 421 has a plurality of cam grooves 422 formed therein. To each of the cam grooves 422, each shift fork 424 is attached. Each shift fork 424 is in engagement with a prescribed transmission gear 49 and a prescribed transmission gear 420 for the main shaft 41 and the drive shaft 42. As shown in FIG. 5A, the shift cam 421 has a plurality of protrusions 423 formed at an end portion in an axial direction thereof. In this embodiment, the protrusions 423 are formed along a perimeter of the shift cam 421 at an interval of 60 degrees. Namely, the rotation angles of the shift cam 421 for the first transmission gear through the sixth transmission gear are set at an interval of 60 degrees. The shift cam 421 is provided with a potentiometer 428 for detecting a rotation angle of the shift cam 421. Information on the rotation angle of the shift cam 421 detected by the potentiometer 428 is output to the ECU 100.

The shift arm 425 has a claw 427 engageable with the protrusions 423 of the shift cam 421. The shift arm 425 is provided with a spring 430. The spring 430 urges the shift arm 425 toward the neutral position. A shift rod 75 is coupled to the shift arm 425 and the shift actuator 72. The shift arm 425 and the shift actuator 72 are connected to each other via the shift rod 75. A length of the shift rod 75 can be adjusted. When the shift actuator 72 is rotated, the shift rod 75 is moved. Along the movement of the shift rod 75, the shift arm 425 is rotated.

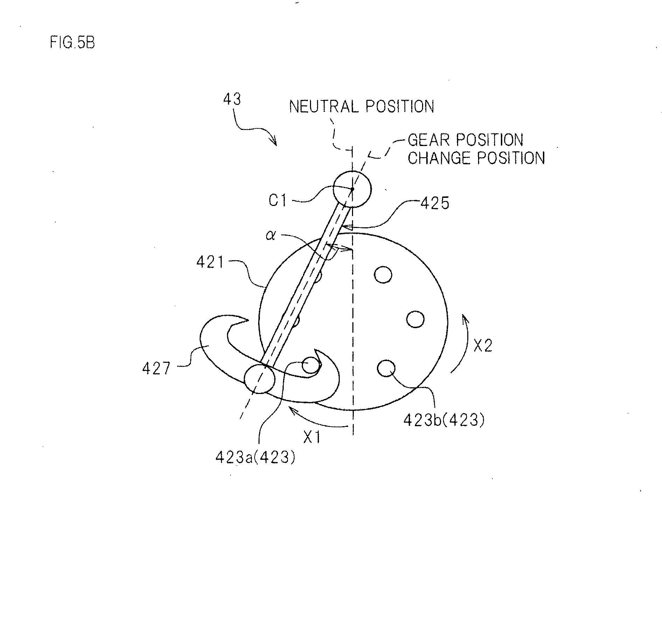

In this embodiment, the shift actuator control section 140 described later, upon receiving a shift-up instruction from the shift switch 8, moves the shift actuator 72 from the start position to the end position in a direction of arrow Z1 in FIG. 5A. As a result, the shift arm 425 is rotated in a direction of arrow X1 in FIG. 5A about a rotation center C1. When the shift actuator 72 is driven to rotate the shift arm 425, the claw 427 is put into engagement with one of the protrusions 423 of the shift cam 421, i.e., the protrusion 423a. As a result, the shift cam 421 is also rotated in the direction of arrow X1 in FIG. 5A. By the rotation of the shift cam 421, each of the plurality of shift forks 424 is guided by the cam groove 422 to move in the axial direction of the main shaft 41. As shown in FIG. 5B, when the shift arm 425 is rotated by a prescribed angle α from the neutral position toward the gear position change position, the gear position is changed. Namely, only one pair of transmission gears, among the plurality of transmission gears 49 and transmission gears 420, which are at positions corresponding to the rotation angle of the shift cam 421 are respectively put into a secured state by a spline with respect to the main shaft 41 and the drive shaft 42. Thus, a gear position in the transmission mechanism 43 is determined. As a result, the conveyance of rotation is performed between the main shaft 41 and the drive shaft 42 at a prescribed deceleration ratio (gear ratio) via the transmission gear 49 and the transmission gear 420.

When the change of gear position is finished, the shift actuator control section 140 moves the shift actuator 72 from the end position to the start position in a direction of arrow Z2 in FIG. 5A. As a result, the shift arm 425 is rotated in a direction of arrow X2 in FIG. 5A. When the shift arm 425 is rotated, the claw 427 and the protrusion 423a are released from the engagement. Since the claw 427 of the shift arm 425 is not engaged with any of the protrusions 423 of the shift cam 421, the shift cam 421 is not rotated even when the shift arm 425 is rotated in the direction of arrow X2 in FIG. 5A. When the shift arm 425 is rotated from the gear position change position to the neutral position, the claw 427 becomes engageable with another one of the plurality of protrusions 423 of the shift cam 421, namely, the protrusion 423b. The shift actuator control section 140, upon receiving a shift-down instruction from the shift switch 8, rotates the shift actuator 72 in the direction of arrow Z2 in FIG. 5A and thus rotates the shift arm 425 in the direction of arrow X2 in FIG. 5A. When the change of gear position is finished, the shift actuator control section 140 rotates the shift actuator 72 in the direction of arrow Z1 in FIG. 5A and thus rotates the shift arm 425 in the direction of arrow X1 in FIG. 5A. After the clutch actuator 70 starts disengaging the friction clutch 46, the shift actuator 72 rotates the shift arm 425 to switch the transmission gears 49 and 420 of the transmission mechanism 43.

The automatic transmission device 40 includes the ECU (Electric Control Unit) 100 as a control device for controlling the shift actuator 72 and the like. The ECU 100 includes the shift actuator 140, a clutch actuator control section 135, and a clutch state detection section 105.

The clutch state detection section 105 can detect a half clutch state of the friction clutch 46 based on the rotation angle or the rotation position of the clutch actuator 70 which is detected by the potentiometer 96. For example, when the rotation angle of the clutch actuator 70 is equal to or smaller than a prescribed rotation angle θ1, the friction clutch 46 is detected as being in an engaged state. When the rotation angle of the clutch actuator 70 is equal to or larger than a prescribed rotation angle θ2, the friction clutch 46 is detected as being in a disengaged state. When the rotation angle of the clutch actuator 70 is larger than θ1 and smaller than θ2, the friction clutch 46 is detected as being in a half clutch state. In the case where a servo motor capable of detecting the rotation angle and the rotation position is used as the clutch actuator 70, the clutch state detection section 105 can detect a half clutch state of the friction clutch 46 based on the rotation angle or the rotation position detected by the servo motor.

The clutch actuator control section 135 controls the clutch actuator 70. The clutch actuator 70 can be driven based on the control by the clutch actuator control section 135. When the friction clutch 46 is in an engaged state and the shift actuator control section 140 has received a gear change instruction from the shift switch 8, the clutch actuator control section 135 controls the clutch actuator 70 to disengage the friction clutch 46. However, in the case where the shift actuator control section 140 receives a gear change instruction from the shift switch 8 and then, another gear change instruction is output to the shift actuator control section 140 from the shift switch 8, the clutch actuator control section 135 disengages the friction clutch 46 when a prescribed time duration passes after the shift actuator 70 returns to the start position.

When the clutch rotation speed difference of the friction clutch 46 becomes substantially zero, the clutch actuator control section 135 engages the friction clutch 46. The clutch rotation speed difference of the friction clutch 46 is the rotation speed difference between the clutch housing 443 (friction plates 445) and the clutch boss 447 (clutch plates 449), and is the same as the difference between the rotation rate of the engine 45 (rotation rate of the crankshaft 25) and the rotation rate of the main shaft 41. The clutch rotation speed difference can be calculated by use of the rotation speed of the crankshaft 25 detected by the crankshaft rotation speed sensor 60 and the rotation speed of the main shaft 41 detected by the main shaft rotation speed sensor 61.

The shift actuator control section 140 controls the shift actuator 72. The shift actuator 72 can be driven based on the control by the shift actuator control section 140. The shift actuator control section 140 controls the shift actuator 72 such that the shift arm 425 moves from the neutral position to the gear position change position. The shift actuator control section 140 controls the shift actuator 72 such that the shift arm 425 moves from the gear position change position to the neutral position.

After a gear change instruction (hereinafter, referred to as a "first gear change instruction") is output from the shift switch 8, the shift actuator control section 140 controls the shift actuator 72 as follows. By the time the shift arm 425 returns to the neutral position after moving from the neutral position to the gear position change position, or when another gear change instruction (hereinafter, referred to as a "second gear change instruction") is output from the shift switch 8 while the friction clutch 46 is in a half clutch state, the shift actuator control section 140 controls the shift actuator 72 after the change of gear position based on the first gear change instruction is finished, such that the driving force of the shift actuator 72 becomes zero or smaller than the urging force of the spring 430. As a result, the shift arm 425 is returned to the neutral position by the urging force of the spring 430. After this, the shift actuator control section 140 controls the shift actuator 72 such that the shift arm 425 is moved from the neutral position to the gear position change position, and thus performs the change of gear position based on the second gear change instruction. In this embodiment, the shift actuator 72 is an electric motor. Therefore, the driving force of the shift actuator 72 can be made zero by stopping the supply of electricity to the electric motor. The driving force of the shift actuator 72 can be made smaller than the urging force of the spring 430 by controlling the supply of electricity to the electric motor.

Preferably, the shift actuator control section 140 controls the shift actuator 72 such that the driving force of the shift actuator 72 becomes zero or smaller than the urging force of the spring 430, after returning the shift actuator 72 from the end position to the start position, and thus returns the shift arm 425 to the neutral position by the urging force of the spring 430. It is preferable that the time duration in which the shift actuator control section 140 controls the shift actuator 72 such that the driving force of the shift actuator 72 becomes zero or smaller than the urging force of the spring 430 is longer than the time duration in which the shift actuator 72 is kept at the start position.

Alternatively, the shift actuator control section 140 may control the shift actuator 72 such that the driving force of the shift actuator 72 becomes zero or smaller than the urging force of the spring 430, when a prescribed time duration passes after the second gear change instruction is output from the shift switch 8, and thus may return the shift arm 425 to the neutral position by the urging force of the spring 430. It should be noted that it is after the change of gear position based on the first gear change instruction is finished that the shift actuator control section 140 may control the shift actuator 72 such that the driving force of the shift actuator 72 becomes zero or smaller than the urging force of the spring 430.

The automatic transmission device 40 according to this embodiment includes at least a clutch state detection device, a clutch actuator control device, and a shift actuator control device. The clutch state detection device includes at least the potentiometer 96 and the clutch state detection section 105. The clutch actuator control device includes at least the clutch actuator control section 135 and the clutch actuator 70. The shift actuator control device includes at least the shift actuator control section 140 and the shift actuator 72.

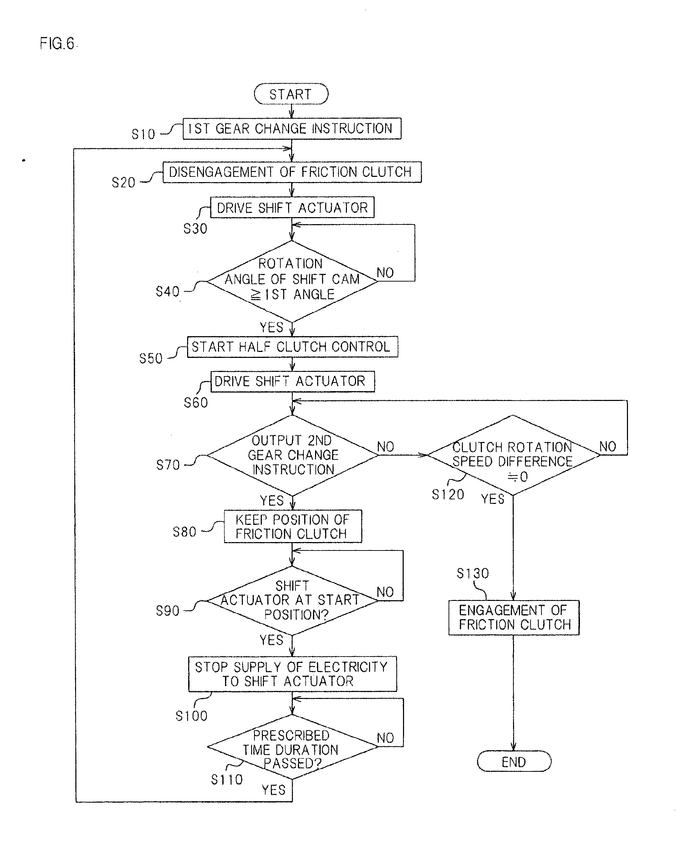

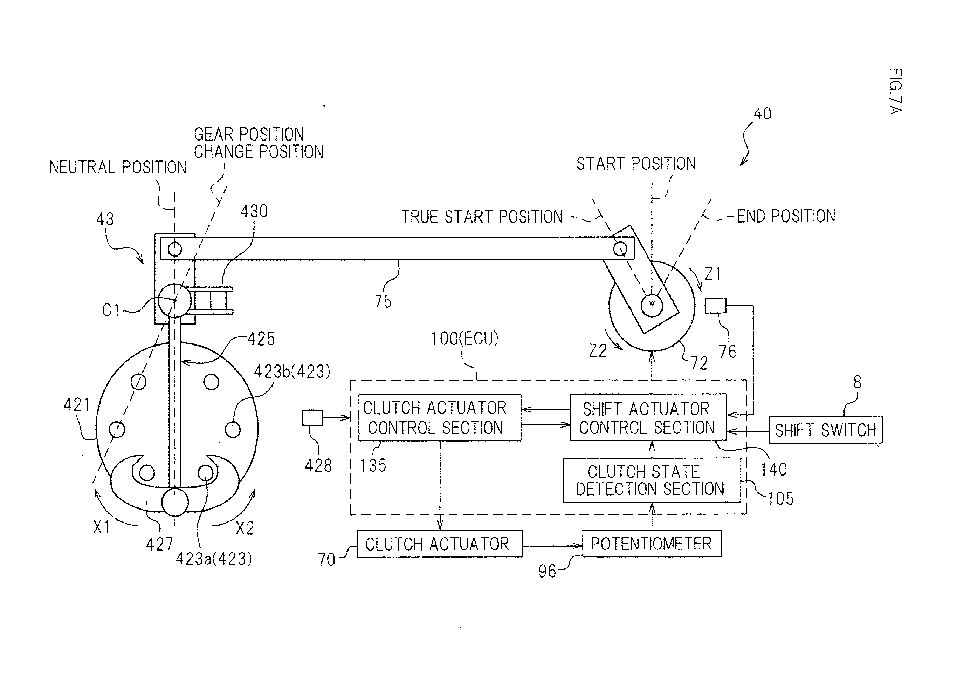

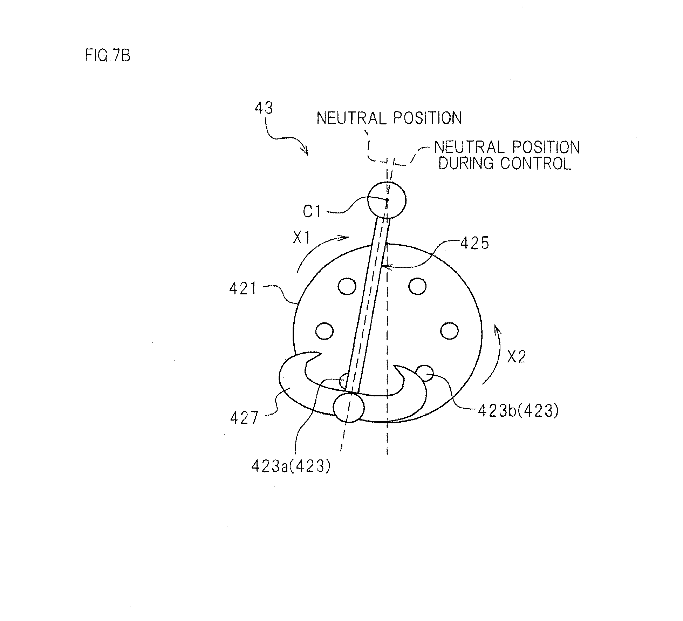

Now, with reference to FIG. 6 through FIG. 8, gear change control of the automatic transmission device 40 according to this embodiment will be described. In this example, a case as shown in FIG. 7A where the shift rod 75 of the automatic transmission device 40 is made shorter will be described. Since the shift rod 75 is shorter, the shift arm 425 returns to the neutral position when the shift actuator 72 returns to the true start position. Since the shift actuator control section 140 returns the shift actuator 72 merely to the start position, the shift arm 425 returns merely to the neutral position during control as shown in FIG. 7B. When the shift arm 425 is at the neutral position during control, the claw 427 of the shift arm 425 cannot be engaged with any of the protrusions 423 of the shift cam 421. When the driving force of the shift actuator 72 becomes zero or smaller than the urging force of the spring 430, the shift arm 425 can return to the neutral position by the urging force of the spring 430.

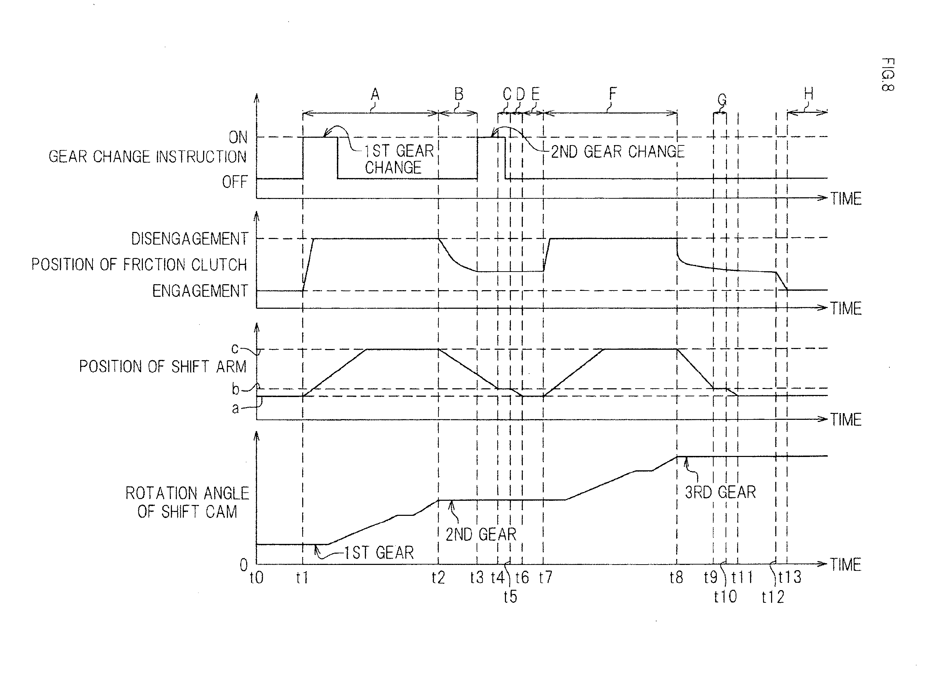

FIG. 6 is a flowchart showing the gear change control of the automatic transmission device 40 according to this embodiment. FIG. 8 is a timing diagram regarding the gear change control of the automatic transmission device 40 according to this embodiment. At time t0 in FIG. 8, the motorcycle 1 is running, and the gear position of the transmission mechanism 43 is the first gear. The timing diagram in FIG. 8 is regarding the change of gear position at the time of shift-up, but the gear change control of the automatic transmission device 40 according to this embodiment may be performed for the change of gear position at the time of shift-down.

In step S10, the rider operates the shift switch 8 while the motorcycle 1 is running. As a result, the first gear change instruction is output from the shift switch 8 to the shift actuator control section 140. In the example shown in FIG. 8, the first gear change instruction is to change the gear position from the first gear to the second gear.

When the shift actuator control section 140 receives the gear change instruction, in step S20, the clutch actuator control section 135 drives the clutch actuator 70 to disengage the friction clutch 46 in order to change the gear position of the transmission mechanism 43 (see time t1 in FIG. 8).

When the disengagement of the friction clutch 46 is started, in step S30, the shift actuator control section 140 performs control of moving the shift actuator 72 from the start position to the end position in the direction of arrow Z1 in FIG. 7A (see time t1 in FIG. 8) in order to move the shift arm 425 from the neutral position (see reference sign a in FIG. 8) to the gear position change position (see reference sign c in FIG. 8). As a result, the shift arm 425 is rotated in the direction of arrow X1 in FIG. 7A about the rotation center C1. When the shift actuator 72 is driven to rotate the shift arm 425, the claw 427 is put into engagement with one of the plurality of protrusions 423 of the shift cam 421, namely, the protrusion 423a. Thus, the shift cam 421 is also rotated in the direction of arrow X1 in FIG. 7A.

In step S40, the ECU 100 determines whether the shift cam 421 has rotated by a prescribed angle or not. In more detail, the ECU 100 determines whether the rotation angle of the shift cam 421 detected by the potentiometer 428 is no less than a first angle or not. When the shift arm 425 is moved to the gear position change position (see FIG. 7A), the rotation angle of the shift cam 421 becomes equal to or larger than the first angle (see an area of reference sign A in FIG. 8). When the rotation angle of the shift cam 421 is equal to or larger than the first angle, the control advances to step S50. By contrast, when the rotation angle of the shift cam 421 is smaller than the first angle, the ECU 100 repeats the above-mentioned determination until the rotation angle of the shift cam 421 becomes equal to or larger than the first angle. In this embodiment, the first angle is 60 degrees. When the shift cam 421 is rotated by 60 degrees, one pair of transmission gears, among the plurality of transmission gears 49 and transmission gears 420, which are at positions corresponding to the rotation angle of the shift cam 421 are put into engagement with each other, and thus the gear position is changed.

When the rotation angle of the shift cam 421 becomes equal to or larger than the first angle and thus the change of gear position from the first gear to the second gear based on the first gear change instruction is finished (see time t2 in FIG. 8), in step S50, the clutch actuator control section 135 controls the clutch actuator 70 to put the friction clutch 46 into a half clutch state from the disengaged state. At time t2, half clutch control of gradually engaging the friction clutch 46 is started.

When the rotation angle of the shift cam 421 becomes equal to or larger than the first angle and thus the change of gear position is finished, in step S60, the shift actuator control section 140 performs control of moving the shift actuator 72 from the end position to the start position in the direction of arrow Z2 in FIG. 7A in order to move the shift arm 425 from the gear position change position to the neutral position. As a result, the shift arm 425 is rotated in the direction of arrow X2 in FIG. 7A about the rotation center C1. When the shift actuator 72 is driven to rotate the shift arm 425, the claw 427 is released from the engagement with the protrusion 423a. Therefore, even when the shift arm 425 is rotated in the direction of arrow X2 in FIG. 7A, the shift cam 421 is not rotated (see an area of reference sign B in FIG. 8). Steps S50 and S60 may be performed in the opposite order or at the same time.

In step S70, the ECU 100 determines whether the second gear change instruction has been output or not from the shift switch 8 to the shift actuator control section 140 by an operation made by the rider on the shift switch 8 in a time duration in which the shift arm 425 is returned from the gear position change position to the neutral position. When the second gear change instruction has been output from the shift switch 8 (see time t3 in FIG. 8), the control advances to step S80. By contrast, when the second gear change instruction has not been output from the shift switch 8, the control advances to step S120. In the example shown in FIG. 8, the second gear change instruction is to change the gear position from the second gear to the third gear.

When the second gear change instruction is output from the shift switch 8 to the shift actuator control section 140, in step S80, the clutch actuator control section 135 controls the clutch actuator 70 to keep the position of the friction clutch 46 at a fixed position (see time t3 in FIG. 8).

In step S90, the ECU 100 determines whether the position of the shift actuator 72 detected by the potentiometer 76 is the start position or not. When the position of the shift actuator 72 is the start position, the control advances to step S100. By contrast, when the shift actuator 72 has not returned to the start position, the ECU 100 repeats the above-mentioned determination until the shift actuator 72 returns to the start position. In step S90, the ECU 100 repeats the above-mentioned determination until the shift actuator 72 returns to the start position, but the determination in step S90 is not limited to this. For example, the ECU 100 may determine whether a prescribed time duration has passed or not from the output of the second gear change instruction. In the example shown in FIG. 8, the shift actuator 72 returns to the start position at time t4. At this point, as shown in FIG. 7B, the shift arm 425 has returned merely to the neutral position during control (see reference sign b in FIG. 8). In an area of reference sign C in FIG. 8, the shift actuator 72 is supplied with electricity and has a driving force, and thus the shift arm 425 cannot be returned to the neutral position by the urging force of the spring 430.

In step S100, the shift actuator 72 is at the start position, and thus the shift actuator control section 140 stops the supply of electricity to the shift actuator 72 (see time t5 in FIG. 8). When the supply of electricity to the shift actuator 72 is stopped, the driving force of the shift actuator 72 becomes zero. Therefore, the shift arm 425 is moved from the neutral position during control toward the neutral position by the urging force of the spring 430 (see an area of reference sign D in FIG. 8). In step S100, the shift actuator control section 140 stops the supply of electricity to the shift actuator 72, but the operation in step S100 is not limited to this. For example, the shift actuator control section 140 may control the supply of electricity to the shift actuator 72 such that the driving force of the shift actuator 72 becomes smaller than the urging force of the spring 430.

In step S110, the ECU 100 determines whether a prescribed time duration has passed or not after the stop of the supply of electricity to the shift actuator 72. The "prescribed time duration" is a time duration sufficient to return the shift arm 425 to the neutral position by the urging force of the spring 430. When the prescribed time duration has passed after the stop of the supply of electricity to the shift actuator 72 (see time t7 in FIG. 8), the control returns to step S20. In step S20, the clutch actuator control section 135 drives the clutch actuator 70 to disengage the friction clutch 46. By contrast, when the prescribed time duration has not passed after the stop of the supply of electricity to the shift actuator 72, the ECU 100 repeats the above-mentioned determination until the prescribed time duration passes. In the example shown in FIG. 8, the shift arm 425 is returned to the neutral position from the neutral position during control by the urging force of the spring 430 at time t6. At this point, the shift actuator 72 is moved to the true start position by the urging force of the spring 430 (see FIG. 7A).

In an area of reference sign E in FIG. 8, the shift arm 425 is at the neutral position, and thus the change of gear position based on the second gear change instruction is started (see time t7 in FIG. 8). The clutch actuator control section 135 cancels the control of keeping the position of the friction clutch 46 at the fixed position, and drives the clutch actuator 70 to disengage the friction clutch 46 (see time t7 in FIG. 8). When the disengagement of the friction clutch 46 is started, the shift actuator control section 140 performs the control of moving the shift actuator 72 from the true start position to the end position in order to move the shift arm 425 from the neutral position to the gear position change position (see time t7 in FIG. 8).

In an area of reference sign F in FIG. 8, the rotation angle of the shift cam 421 becomes equal or larger than the first angle, and the change of gear position from the second gear to the third gear based on the second gear change instruction is finished. When the change of gear position is finished (see time t8 in FIG. 8), the clutch actuator control section 135 drives the clutch actuator 70 to move the friction clutch 46 toward a position at which the friction clutch 46 is engaged (hereinafter referred to as an "engagement position"). At time t8, the half clutch control of gradually engaging the friction clutch 46 is started. The shift actuator control section 140 performs the control of moving the shift actuator 72 from the end position to the start position in order to move the shift arm 425 from the gear position change position to the neutral position (see time t8 in FIG. 8).

In an area of reference sign G in FIG. 8, the shift actuator 72 is back at the start position (see time t9 in FIG. 8), and thus the shift actuator control section 140 stops the supply of electricity to the shift actuator 72 (time t10 in FIG. 8). As a result, the shift arm 425 is returned from the neutral position during control to the neutral position by the urging force of the spring 430 (time t11 in FIG. 8). At this point, the shift actuator 72 is moved to the true start position by the urging force of the spring 430.

After the half clutch control is started at time t8 in FIG. 8, the clutch rotation speed difference is gradually decreased. At time t12 in FIG. 8, the ECU 100 determines that the clutch rotation speed difference is substantially zero. Therefore, the clutch actuator control section 135 drives the clutch actuator 70 to engage the friction clutch 46. Namely, the clutch actuator control section 135 terminates the half clutch control of gradually engaging the friction clutch 46 and engages the friction clutch 46 quickly (see time t13 in FIG. 8). In an area of reference sign H in FIG. 8, the motorcycle 1 finishes the gear change.

When the second gear change instruction has not been output from the shift switch 8 in step S70, the control advances to step S120. In step S120, the ECU 100 determines whether the clutch rotation speed difference of the friction clutch 46 is substantially zero or not based on the rotation speed of the crankshaft 25 detected by the crankshaft rotation speed sensor 60 and the rotation speed of the main shaft 41 detected by the main shaft rotation speed sensor 61. When the clutch rotation speed difference is substantially zero, the control advances to step S130 in order to finish the half clutch control. By contrast, when the clutch rotation speed difference is not substantially zero, the control returns to step S70.

In step S130, the clutch rotation speed difference is substantially zero, and thus the clutch actuator control section 135 drives the clutch actuator 70 to engage the friction clutch 46. At this point, the shift arm 425 has been moved from the gear position change position to the neutral position by the shift actuator 72, and the shift arm 425 is located at the neutral position by the urging force of the spring 430. When the friction clutch 46 is engaged, the control shown in FIG. 6 is finished.

As described above, with the automatic transmission device 40 according to this embodiment, when the second gear change instruction is output from the shift switch 8 in a time duration in which the shift arm 425 is moved from the neutral position to the gear position change position and back to the neutral position, the shift actuator control section 140 makes the driving force of the shift actuator 72 smaller than the urging force of the spring 430 after, or in the middle of, returning the shift actuator 72 to the start position. Therefore, the shift arm 425 is returned to the neutral position by the urging force of the spring 430. Thus, even when the start position of the shift actuator 72 is deviated, the shift arm 425 is returned to the neutral position with certainty before the change of gear position based on the second gear change instruction is started. When the shift arm 425 is returned to the neutral position, the claw 427 of the shift arm 425 is put into engagement with the protrusion 423 of the shift cam 421 with certainty. Therefore, the change of gear position based on the second gear change instruction can be performed with certainty.

According to this embodiment, after returning the shift actuator 72 from the end position to the start position, the shift actuator control section 140 controls the shift actuator 72 such that the driving force of the shift actuator 72 becomes zero or smaller than the urging force of the spring 430, and thus returns the shift arm 425 to the neutral position by the urging force of the spring 430. Owing to this, the shift arm 425 can be moved quickly by the driving force of the shift actuator 72 by the time the shift actuator 72 is returned to the start position. The time duration required to move the shift arm 425 to the neutral position by the urging force of the spring 430 is shortened. Therefore, the gear change can be realized within a shorter time.

According to this embodiment, the time duration in which the shift actuator control section 140 controls the shift actuator 72 such that the driving force of the shift actuator 72 becomes zero or smaller than the urging force of the spring 430 is longer than the time duration in which the shift actuator 72 is kept at the start position. Owing to this, the shift arm 425 can be returned to the neutral position with more certainty.

According to this embodiment, the shift actuator 72 is the electric motor 72, and the shift actuator control section 140 stops the supply of electricity to the electric motor 72 after returning the electric motor 72 from the end position to the start position, and thus returns the shift arm 425 to the neutral position by the urging force of the spring 430. Owing to this, the shift arm 425 can be moved quickly by the driving force of the shift actuator 72 by the time the shift actuator 72 is returned to the start position. The time duration required to move the shift arm 425 to the neutral position by the urging force of the spring 430 is shortened. Therefore, the gear change can be realized within a shorter time.

According to this embodiment, when a prescribed time duration passes after the second gear change instruction is output from the shift switch 8, the shift actuator control section 140 controls the shift actuator 72 such that the driving force of the shift actuator 72 becomes zero or smaller than the urging force of the spring 430, and thus returns the shift arm 425 to the neutral position by the urging force of the spring 430. The shift arm 425 can be close to the neutral position to some extent by the driving force of the shift actuator 72. Therefore, the time duration required to return the shift arm 425 to the neutral position can be shortened. Thus, the gear change can be realized within a shorter time.

According to this embodiment, the automatic transmission device includes the friction clutch 46 located between the engine 45 and the rear wheel 23 of the motorcycle 1, the clutch actuator 70 for engaging and disengaging the friction clutch 46, and the clutch state detection section 105 for detecting a half clutch state of the friction clutch 46. The transmission mechanism 43 is provided between the friction clutch 46 and the rear wheel 23. The shift actuator control section 140 controls the shift actuator 72 such that the driving force of the shift actuator 72 becomes zero or smaller than the urging force of the spring 430, after the first gear change instruction is output from the shift switch 8, or in the case where the second gear change instruction is output from the shift switch 8 while the friction clutch 46 is in a half clutch state, after the change of gear position based on the first gear change instruction is finished, and thus returns the shift arm 425 to the neutral position by the urging force of the spring 430. After this, the shift actuator control section 140 controls the shift actuator 72 such that the shift arm 425 is moved from the neutral position to the gear position change position, and thus performs the change of gear position based on the second gear change instruction.

According to this embodiment, the spring 430 urges the shift arm 425 toward the neutral position. The urging force for urging the shift arm 425 can be easily adjusted by changing the type or material of the spring to be used. By use of the spring 430, the urging member for urging the shift arm 425 toward the neutral position can be formed at low cost and simply. Nonetheless, the urging member for urging the shift arm 425 toward the neutral position is not limited to the spring 430.

According to this embodiment, the automatic transmission device includes the shift rod 75 coupled to the shift actuator 72 and the shift arm 425 and having an adjustable length. When the length of the shift rod 75 is adjusted, the initial position of the shift arm 425 may be deviated. However, even in such a case, the automatic transmission device 40 can perform the gear change continually within a short time.

According to this embodiment, the motorcycle 1 including the automatic transmission device 40 having the above-described structure is provided. The motorcycle 1 provides the above-described functions and effects.

The vehicle according to the present invention is not limited to a vehicle for executing semi-automatic control of automatically performing the gear change based on an intention of the rider, and may be a vehicle for executing full-automatic control of automatically performing the gear change in accordance with the driving state of the vehicle, regardless of the intention of the rider.

The automatic transmission device according to the present invention is applicable to a dual clutch transmission (hereinafter, referred to as a "DCT"). The present invention is applicable to a DCT executing the semi-automatic control and also to a DCT executing the full-automatic control.

In the present invention, the "change of gear position" encompasses a change to the neutral gear position and a change from the neutral gear position. Namely, the "change of gear position" encompasses a change from a gear position at which the power is conveyed at a prescribed deceleration ratio to a gear position at which the power is conveyed at another deceleration ratio (e.g., change from the first gear to the second gear), a change from a gear position at which the power is conveyed at a prescribed deceleration ratio to a gear position at which the power is not conveyed (e.g., change from the first gear to the neutral gear position), and a change from to a gear position at which the power is not conveyed to a gear position at which the power is conveyed at a prescribed deceleration ratio (e.g., change from the neutral gear position to the first gear).

## Claims

1. An automatic transmission device (40), comprising:
a stepped transmission mechanism (43) including a rotatable shift cam (421) having a plurality of first engaging portions (423) and a shift arm (425) having a second engaging portion (427) engageable with any of the first engaging portions (423); in which when the shift arm (425) is moved from a neutral position to a gear position change position, the second engaging portion (427) is put into engagement with one of the first engaging portions (423) and the shift cam (421) is rotated along with the movement of the shift arm (425), and thus change of gear position is performed; and when the shift arm (425) is moved from the gear position change position to the neutral position, the second engaging portion (427) is released from the engagement with the one of the first engaging portions (423) and becomes engageable with another one of the first engaging portions (423);
a shift actuator (72) configured to give a driving force to the shift arm (425) so as to move the shift arm (425) from the neutral position toward the gear position change position, by moving from a start position to an end position, and configured to give the shift arm (425) a driving force so as to move the shift arm (425) from the gear position change position toward the neutral position, by moving from the end position to the start position;
an urging member (430) configured to urge the shift arm (425) toward the neutral position;
a gear change instruction output device (8) configured to output a gear change instruction; and
a shift actuator control device (140) configured to control the shift actuator (72);
**characterized in that**
in the case where after a first gear change instruction is output from the gear change instruction output device (8), a second gear change instruction is output from the gear change instruction output device (8) before the shift arm (425) returns to the neutral position after moving from the neutral position to the gear position change position, the shift actuator control device (140) is configured to control the shift actuator (72) such that a driving force of the shift actuator (72) becomes zero or smaller than an urging force of the urging member (430), after change of gear position based on the first gear change instruction is finished, and thus the shift arm (425) is returned to the neutral position by the urging force of the urging member (430); and the shift actuator control device (140) is configured to then control the shift actuator (72) such that the shift arm (425) is moved from the neutral position to the gear position change position, and thus change of gear position is performed based on the second gear change instruction.

2. An automatic transmission device (40) according to claim 1, wherein after the shift actuator (72) is returned from the end position to the start position, the shift actuator control device (140) is configured to control the shift actuator (72) such that the driving force of the shift actuator (72) becomes zero or smaller than the urging force of the urging member (430), and thus the shift arm (425) is returned to the neutral position by the urging force of the urging member (430).

3. An automatic transmission device (40) according to claim 1 or 2, wherein a time duration in which the shift actuator (72) is controlled such that the driving force of the shift actuator (72) becomes zero or smaller than the urging force of the urging member (430) is longer than a time duration in which the shift actuator (72) is kept at the start position.

4. An automatic transmission device (40) according to any one of claims 1 to 3, wherein:
the shift actuator (72) is an electric motor (72); and
the shift actuator control device (140) is configured to stop supply of electricity to the electric motor (72) after the electric motor (72) is returned from the end position to the start position, and thus the shift arm (425) is returned to the neutral position by the urging force of the urging member (430).

5. An automatic transmission device (40) according to any one of claims 1 to 4, wherein when a prescribed time duration passes after the second gear change instruction is output from the gear change instruction output device (8), the shift actuator control device (140) is configured to control the shift actuator (72) such that the driving force of the shift actuator (72) becomes zero or smaller than the urging force of the urging member (430), and thus the shift arm (425) is returned to the neutral position by the urging force of the urging member (430).

6. An automatic transmission device (40) according to any one of claims 1 to 5, further comprising:
a clutch (46) provided between the engine (45) and a driving wheel (23) of a vehicle (1);
a clutch actuator (70) configured to engage and disengage the clutch (46); and
a clutch state detection device (105) configured to detect a half clutch state of the clutch (46).

7. An automatic transmission device (40) according to claim 6, wherein:
the transmission mechanism (43) is provided between the clutch (46) and the driving wheel (23); and
in the case where the first gear change instruction is output from the gear change instruction output device (8) and then the second gear change instruction is output from the gear change instruction output device (8) while the clutch (46) is in a half clutch state, the shift actuator control device (140) is configured to control the shift actuator (72) such that the driving force of the shift actuator (72) becomes zero or smaller than the urging force of the urging member (430), after the change of gear position based on the first gear change instruction is finished, and thus the shift arm (425) is returned to the neutral position by the urging force of the urging member (430); and the shift actuator control device (140) is configured to then control the shift actuator (72) such that the shift arm (425) is moved from the neutral position to the gear position change position, and thus the change of gear position is performed based on the second gear change instruction.

8. An automatic transmission device (40) according to any one of claims 1 to 7, wherein the urging member (430) is formed of a spring (430) for urging the shift arm (425) toward the neutral position.

9. An automatic transmission device (40) according to any one of claims 1 to 8, further comprising a shift rod (75) coupled to the shift actuator (72) and the shift arm (425) and having an adjustable length.

10. A vehicle (1), comprising an automatic transmission device (40) according to any one of claims 1 to 9.

## Patentansprüche

1. Automatikgetriebevorrichtung (40), die umfasst:
einen Stufengetriebemechanismus (43), das einen drehbaren Schaltnocken (421) mit einer Vielzahl von ersten Eingriffsabschnitten (423) und einen Schaltarm (425) mit einem zweiten Eingriffsabschnitt (427) aufweist, der in einen der ersten Eingriffsabschnitte (423) einrückbar ist; wobei, wenn der Schaltarm (425) aus einer neutralen Position in eine Zahnradstellungs-Änderungsposition bewegt wird, der zweite Eingriffsabschnitt (427) in Eingriff mit einem der ersten Eingriffsabschnitte (423) gerückt wird und der Schaltnocken (421) zusammen mit der Bewegung des Schaltarms (425) gedreht wird, so dass die Änderung der Zahnradstellung durchgeführt wird; und wenn der Schaltarm (425) aus der Zahnradstellungs-Änderungsposition in die neutrale Position bewegt wird, der zweite Eingriffsabschnitt (427) aus dem Eingriff mit dem einen der ersten Eingriffsabschnitte (423) gelöst wird und in einen anderen der ersten Eingriffsabschnitte (423) eingerückt werden kann;
ein Schaltstellglied (72), das dazu eingerichtet ist, eine Antriebskraft auf den Schaltarm (425) zu übertragen, um den Schaltarm (425) aus der neutralen Position in die Zahnradstellungs-Änderungsposition zu bewegen, durch eine Bewegung von einer Startposition zu einer Endposition, und dazu eingerichtet ist, eine Antriebskraft auf den Schaltarm (425) zu übertragen, um den Schaltarm (425) aus der Zahnradstellungs-Änderungsposition in die neutrale Position zu bewegen, durch eine Bewegung von der Endposition auf die Startposition;
ein Drückelement (430), das dazu eingerichtet ist, den Schaltarm (425) in die neutrale Position zu drücken;
eine Zahnradänderungs-Befehlsausgabevorrichtung (8), die dazu eingerichtet ist, einen Zahnradänderungsbefehl auszugeben; und
eine Schaltstellglied-Steuervorrichtung (140), die dazu eingerichtet ist, das Schaltstellglied (72) zu steuern;
**dadurch gekennzeichnet, dass**
wenn nach der Ausgabe eines ersten Zahnradänderungsbefehls durch die Zahnradänderungs-Befehlsausgabevorrichtung (8) ein zweiter Zahnradänderungsbefehl von der Zahnradänderungs-Befehlsausgabevorrichtung (8) ausgegeben wird, bevor der Schaltarm (425) in die neutrale Position zurückkehrt, nachdem er sich aus der neutralen Position in die Zahnradstellungs-Änderungsposition bewegt hat, die Schaltstellglied-Steuervorrichtung (140) dazu eingerichtet ist, das Schaltstellglied (72) so zu steuern, dass eine Antriebskraft des Schaltstellglieds (72) Null oder kleiner als eine Drückkraft des Drückelements (430) wird, nachdem die Änderung der Zahnradstellung basierend auf dem ersten Zahnradänderungsbefehl abgeschlossen ist, und der Schaltarm (425) somit durch die Drückkraft des Drückelements (430) in die neutrale Position zurückgestellt wird; und die Schaltstellglied-Steuervorrichtung (140) dazu eingerichtet ist, das Schaltstellglied (72) anschließend so zu steuern, dass der Schaltarm (425) aus der neutralen Position in die Zahnradstellungs-Änderungsposition bewegt wird, und somit eine Änderung der Zahnradstellung basierend auf dem zweiten Zahnradänderungsbefehl durchgeführt wird.

2. Automatikgetriebevorrichtung (40) nach Anspruch 1, wobei, nachdem das Schaltstellglied (72) von der Endposition auf die Startposition zurückgestellt wurde, die Schaltstellglied-Steuervorrichtung (140) dazu eingerichtet ist, das Schaltstellglied (72) so zu steuern, dass die Antriebskraft des Schaltstellglieds (72) Null oder kleiner als die Drückkraft des Drückelements (430) wird, und der Schaltarm (425) somit durch die Drückkraft des Drückelements (430) in die neutrale Position zurückgestellt wird.

3. Automatikgetriebevorrichtung (40) nach Anspruch 1 oder 2, wobei eine Zeitdauer, während welcher das Schaltstellglied (72) so gesteuert wird, dass die Antriebskraft des Schaltstellglieds (72) Null oder kleiner als die Drückkraft des Drückelements (430) wird, länger als eine Zeitdauer ist, während welcher das Schaltstellglied (72) in der Startposition gehalten wird.

4. Automatikgetriebevorrichtung (40) nach einem der Ansprüche 1 bis 3, wobei:
das Schaltstellglied (72) ein Elektromotor (72) ist; und
die Schaltstellglied-Steuervorrichtung (140) dazu eingerichtet ist, die Stromversorgung des Elektromotors (72) zu stoppen, nachdem der Elektromotor (72) aus der Endposition auf die Startposition zurückgestellt wurde, und der Schaltarm (425) somit durch die Drückkraft des Drückelements (430) in die neutrale Position zurückgestellt wird.

5. Automatikgetriebevorrichtung (40) nach einem der Ansprüche 1 bis 4, wobei, wenn eine vorgegebene Zeitdauer verstreicht, nachdem der zweite Zahnradänderungsbefehl von der Zahnradänderungs-Befehlsausgabevorrichtung (8) ausgegeben wurde, die Schaltstellglied-Steuervorrichtung (140) dazu eingerichtet ist, das Schaltstellglied (72) so zu steuern, dass die Antriebskraft des Schaltstellglieds (72) Null oder kleiner als die Drückkraft des Drückelements (430) wird, und der Schaltarm (425) somit durch die Drückkraft des Drückelements (430) in die neutrale Position zurückgestellt wird.

6. Automatikgetriebevorrichtung (40) nach einem der Ansprüche 1 bis 5, des Weiteren umfassend:
eine Kupplung (46), die zwischen dem Motor (45) und einem Antriebsrad (23) eines Fahrzeugs (1) angeordnet ist;
ein Kupplungsstellglied (70), das dazu eingerichtet ist, die Kupplung (46) einzurücken und auszurücken; und
eine Kupplungszustands-Ermittlungsvorrichtung (105), die dazu eingerichtet ist, einen Halb-Kupplungszustand der Kupplung (46) zu ermitteln.

7. Automatikgetriebevorrichtung (40) nach Anspruch 6, wobei:
der Getriebemechanismus (43) zwischen der Kupplung (46) und dem Antriebsrad (23) angeordnet ist; und
wenn der erste Zahnradänderungsbefehl von der Zahnradänderungs-Befehlsausgabevorrichtung (8) ausgegeben wird und dann ein zweiter Zahnradänderungsbefehl von der Zahnradänderungs-Befehlsausgabevorrichtung (8) ausgegeben wird, während sich die Kupplung (46) im Halb-Kupplungszustand befindet, die Schaltstellglied-Steuervorrichtung (140) dazu eingerichtet ist, das Schaltstellglied (72) so zu steuern, dass die Antriebskraft des Schaltstellglieds (72) Null oder kleiner als die Drückkraft des Drückelements (430) wird, nachdem die Änderung der Zahnradstellung basierend auf dem ersten Zahnradänderungsbefehl abgeschlossen ist, und der Schaltarm (425) somit durch die Drückkraft des Drückelements (430) in die neutrale Position zurückgestellt wird; und die Schaltstellglied-Steuervorrichtung (140) dazu eingerichtet ist, das Schaltstellglied (72) anschließend so zu steuern, dass der Schaltarm (425) aus der neutralen Position in die Zahnradstellungs-Änderungsposition bewegt wird, und somit die Änderung der Zahnradstellung basierend auf dem zweiten Zahnradänderungsbefehl durchgeführt wird.

8. Automatikgetriebevorrichtung (40) nach einem der Ansprüche 1 bis 7, wobei das Drückelement (430) aus einer Feder (430) besteht, um den Schaltarm (425) in die neutrale Position zu drücken.

9. Automatikgetriebevorrichtung (40) nach einem der Ansprüche 1 bis 8, des Weiteren umfassend eine Schaltstange (75), die mit dem Schaltstellglied (72) und dem Schaltarm (425) verbunden ist und eine einstellbare Länge aufweist.

10. Fahrzeug (1), das eine Automatikgetriebevorrichtung (40) nach einem der Ansprüche 1 bis 9 umfasst.

## Revendications

1. Dispositif de transmission automatique (40) comprenant :
un mécanisme de transmission étagé (43) comportant une came de changement de rapport rotative (421) comportant une pluralité de premières parties d'engagement (423) et un bras de changement de rapport (425) comportant une deuxième partie d'engagement (427) engageable avec l'une quelconque des premières parties d'engagement (423) ; dans lequel, lorsque le bras de changement de rapport (425) est déplacé depuis une position neutre jusqu'à une position de changement de position de vitesse, la deuxième partie d'engagement (427) est mise en engagement avec l'une des premières parties d'engagement (423) et la came de changement de rapport (421) est tournée conjointement avec le mouvement du bras de changement de rapport (425), et un changement de position de vitesse est par conséquent mis en oeuvre ; et lorsque le bras de changement de rapport (425) est déplacé depuis la position de changement de position de vitesse jusqu'à la position neutre, la deuxième partie d'engagement (427) est libérée de l'engagement avec l'une des premières parties d'engagement (423) et devient engageable avec une autre partie des premières parties d'engagement (423) ;
un actionneur de changement de rapport (72) configuré pour fournir une force d'entraînement au bras de changement de rapport (425) de manière à déplacer le bras de changement de rapport (425) depuis la position neutre vers la position de changement de position de vitesse, en se déplaçant depuis une position de départ jusqu'à une position terminale, et configuré pour fournir au bras de changement de rapport (425) une force d'entraînement de manière à déplacer le bras de changement de rapport (425) depuis la position de changement de position de vitesse vers la position neutre, en se déplaçant depuis la position terminale jusqu'à la position de départ,
un élément de poussée (430) configuré pour pousser le bras de changement de rapport (425) vers la position neutre ;
un dispositif de sortie d'instruction de changement de vitesse (8) configuré pour sortir une instruction de changement de vitesse ; et
un dispositif de commande de l'actionneur de changement de rapport (140) configuré pour commander l'actionneur de changement de rapport (72) ;
**caractérisé**
**en ce que** dans le cas où, après qu'une première instruction de changement de vitesse est sortie par le dispositif de sortie d'instruction de changement de vitesse (8), une deuxième instruction de changement de vitesse est sortie par le dispositif de sortie d'instruction de changement de vitesse (8) avant que le bras de changement de rapport (425) ne retourne à la position neutre après le déplacement depuis la position neutre jusqu'à la position de changement de position de vitesse, le dispositif de commande de l'actionneur de changement de rapport (140) est configuré pour commander l'actionneur de changement de rapport (72) de telle sorte qu'une force d'entraînement de l'actionneur de changement de rapport (72) devient nulle ou inférieure à une force de poussée de l'élément de poussée (430), après qu'un changement de position de vitesse sur base de la première instruction de changement de vitesse est terminé, et par conséquent le bras de changement de rapport (425) est renvoyé jusqu'à la position neutre par la force de poussée de l'élément de poussée (430) ; et le dispositif de commande de l'actionneur de changement de rapport (140) est configuré pour alors commander l'actionneur de changement de rapport (72) de telle sorte que le bras de changement de rapport (425) est déplacé depuis la position neutre jusqu'à la position de changement de position de vitesse, et par conséquent le changement de position de vitesse est mis en oeuvre sur base de la deuxième instruction de changement de vitesse.

2. Dispositif de transmission automatique (40) selon la revendication 1, dans lequel, après que l'actionneur de changement de rapport (72) est renvoyé depuis la position terminale jusqu'à la position de départ, le dispositif de commande de l'actionneur de changement de rapport (140) est configuré pour commander l'actionneur de changement de rapport (72) de telle sorte que la force d'entraînement de l'actionneur de changement de rapport (72) devient nulle ou inférieure à la force de poussée de l'élément de poussée (430), et par conséquent le bras de changement de rapport (425) est renvoyé jusqu'à la position neutre par la force de poussée de l'élément de poussée (430).

3. Dispositif de transmission automatique (40) selon la revendication 1 ou 2, dans lequel une période pendant laquelle l'actionneur de changement de rapport (72) est commandé de telle sorte que la force d'entraînement de l'actionneur de changement de rapport (72) devient nulle ou inférieure à la force de poussée de l'élément de poussée (430) est supérieure à une période pendant laquelle l'actionneur de changement de rapport (72) est maintenu dans la position de départ.

4. Dispositif de transmission automatique (40) selon l'une quelconque des revendications 1 à 3, dans lequel :
l'actionneur de changement de rapport (72) est un moteur électrique (72) ; et
le dispositif de commande de l'actionneur de changement de rapport (140) est configuré pour couper l'alimentation électrique du moteur électrique (72) après que le moteur électrique (72) est renvoyé depuis la position terminale jusqu'à la position de départ, et par conséquent le bras de changement de rapport (425) est renvoyé jusqu'à la position neutre par la force de poussée de l'élément de poussée (430).

5. Dispositif de transmission automatique (40) selon l'une quelconque des revendications 1 à 4, dans lequel, lorsqu'une période prescrite s'est écoulée après que la deuxième instruction de changement de vitesse est sortie par le dispositif de sortie d'instruction de changement de vitesse (8), le dispositif de commande d'actionneur de changement de rapport (140) est configuré pour commander l'actionneur de changement de rapport (72) de telle sorte que la force d'entraînement de l'actionneur de changement de rapport (72) devient nulle ou inférieure à la force de poussée de l'élément de poussée (430), et par conséquent le bras de changement de rapport (425) est renvoyé jusqu'à la position neutre par la force de poussée de l'élément de poussée (430).

6. Dispositif de transmission automatique (40) selon l'une quelconque des revendications 1 à 5, comprenant en outre :
un embrayage (46) agencé entre le moteur (45) et une roue d'entraînement (23) d'un véhicule (1) ;
un actionneur d'embrayage (70) configuré pour engager et désengager l'embrayage (46) ; et
un dispositif de détection d'état de l'embrayage (105) configuré pour détecter un état de semi-embrayage de l'embrayage (46).

7. Dispositif de transmission automatique (40) selon la revendication 6, dans lequel :
le mécanisme de transmission (43) est agencé entre l'embrayage (46) et la roue d'entraînement (23) ; et
dans le cas où la première instruction de changement de vitesse est sortie par le dispositif de sortie d'instruction de changement de vitesse (8) et ensuite la deuxième instruction de changement de vitesse est sortie par le dispositif de sortie d'instruction de changement de vitesse (8) alors que l'embrayage (46) se trouve dans un état de semi-embrayage, le dispositif de commande d'actionneur de changement de rapport (140) est configuré pour commander l'actionneur de changement de rapport (72) de telle sorte que la force d'entraînement de l'actionneur de changement de rapport (72) devient nulle ou inférieure à la force de poussée de l'élément de poussée (430), après que le changement de position de vitesse sur base de la première instruction de changement de vitesse est terminé, et par conséquent le bras de changement de rapport (425) est renvoyé jusqu'à la position neutre par la force de poussée de l'élément de poussée (430) ; et le dispositif de commande de l'actionneur de changement de rapport (140) est configuré pour alors commander l'actionneur de changement de rapport (72) de telle sorte que le bras de changement de rapport (425) est déplacé depuis la position neutre jusqu'à la position de changement de position de vitesse, et par conséquent le changement de position de vitesse est mis en oeuvre sur base de la deuxième instruction de changement de vitesse.

8. Dispositif de transmission automatique (40) selon l'une quelconque des revendications 1 à 7, dans lequel l'élément de poussée (430) est constitué par un ressort (430) pour pousser le bras de changement de rapport (425) vers la position neutre.

9. Dispositif de transmission automatique (40) selon l'une quelconque des revendications 1 à 8, comprenant en outre une tige de changement de rapport (75) couplée à l'actionneur de changement de rapport (72) ainsi qu'au bras de changement de rapport (425) et ayant une longueur réglable.

10. Véhicule (1) comprenant un dispositif de transmission automatique (40) selon l'une quelconque des revendications 1 à 9.
